# EUROPEAN PATENT SPECIFICATION

(11) **EP 4 184 821 B1**
(45) Date of publication and mention of the grant of the patent: **16.04.2025**
(21) Application number: 21855331.1
(22) Date of filing: 20.07.2021
(51) Int. Cl.: H04L 9/32, H04L 9/40, H04L 65/1016

(54) **IMS DATA CHANNEL-BASED COMMUNICATION METHOD AND DEVICE**
AUF IMS-DATENKANAL BASIERENDES KOMMUNIKATIONSVERFAHREN UND VORRICHTUNG
PROCÉDÉ ET DISPOSITIF DE COMMUNICATION À BASE D'UN CANAL DE DONNÉES IMS

(30) Priority: 11.08.2020 CN 202010803406
(43) Date of publication of application: 24.05.2023
(73) Proprietor: Huawei Technologies Co., Ltd., Shenzhen, Guangdong 518129 (CN)
(72) Inventor: WEI, Haitao, Shenzhen, Guangdong 518129 (CN); YE, Jinzhou, Shenzhen, Guangdong 518129 (CN)
(74) Representative: Pfenning, Meinig & Partner mbB
(86) International application number: PCT/CN2021/107414
(87) International publication number: WO 2022/033278

(56) References cited:
- EP-A1- 2 448 172
- CN-A- 104 283 760
- CN-A- 106 470 190
- CN-A- 107 294 968
- CN-A- 109 792 433
- US-A1- 2016 072 778
- US-B2- 9 077 806

## Description

### TECHNICAL FIELD

This application relates to the wireless communication field, and in particular, to an IMS data channel based communication method and a device. Document US 9 077806 B2 discloses a method, system and apparatus for implementing secure call forwarding. This method includes: a calling party calling a called party, the called party triggering the subscribed call forwarding service; a key management server obtaining information of a legal call-forwarded party of the called party through an application server; the call-forwarded party obtaining a media key from the key management server; and the calling party establishing a call connection with the call-forwarded party. Document EP 2 448 173 A1 describes a method for transmitting deferred media information in an internet protocol multimedia subsystem: the sending party of the media information sends encrypted key generation parameters to a mailbox server of the receiving party of the media information; the mailbox server saves the encrypted key generation parameters, and sends the encrypted key generation parameters to a Key Management Server; the Key Management Server generates a media key, and forwards the media key to the sending party through the mailbox server of the receiving party; the receiving party obtains the encrypted key generation parameters from the mailbox server, and sends to the Key Management Server; the Key Management Server generates the media key and sends the media key to the receiving party; the receiving party decrypt the encrypted media information by using the media key.

### BACKGROUND

An internet protocol multimedia subsystem (internet protocol multimedia subsystem, IMS) data channel is a new concept that newly emerges in the industry. A main technical feature of the IMS data channel is that a 5th generation wireless communication (5th generation wireless communication, 5G) technology is superposed based on a voice service of voice over long term evolution (voice over long term evolution, VoLTE), to upgrade IMS based real-time audio and video communication to real-time interaction, thereby enriching IMS-enabled service scenarios.

Currently, the IMS data channel may be considered as a newly added media type, and a stream control transfer protocol over datagram transport layer security over user datagram protocol (stream control transmission protocol over datagram transport layer security over user datagram protocol, SCTP over DTLS over UDP) used in web real time communication (web real time communication, WebRTC) may be used as a bearer protocol. This means that a security mechanism of the IMS data channel is different from that used by an audio service and a video service. The former uses the SCTP over DTLS over UDP protocol, and the latter uses a secure real time transport protocol (secure real time transport protocol, SRTP). For the SCTP over DTLS over UDP, a security certificate is required. For the SRTP, only a key needs to be obtained. If a security certificate used by the IMS data channel is autonomously generated or installed by a terminal or an application, a network loses capabilities of controlling and monitoring communication content in the IMS data channel, and communication reliability is affected.

### SUMMARY

This application provides an IMS data channel based communication method and a device, to provide reliable IMS data channel communication. The invention is set out in the appended set of claims.

According to a first aspect of the invention, this application provides an IMS data channel based communication method, and the method may be applied to a certificate management server in a communication network. In the communication network, the certificate management server may communicate with a corresponding terminal (for example, a first terminal) by using network elements of an IMS network, such as an application server (application server, AS) and a call session control function (call session control function, CSCF). When a first application on the first terminal is to perform an IMS data channel service with a second application on a second terminal, first, the certificate management server receives an encrypted ticket (ticket) from the first terminal and identification information for identifying the first application that are forwarded by the AS. Then, the certificate management server sends the encrypted ticket and the identification information of the first application to a key management server (key management server, KMS), so that the KMS verifies the first application based on the encrypted ticket and the identification information of the first application, and notifies the certificate management server of a verification result. Next, after the first application is successfully verified, the certificate management server receives a first key from the KMS, and generates a corresponding data channel application certificate based on the first key. Finally, the certificate management server sends the data channel application certificate to the first terminal by using the AS, so that the first application can perform an IMS data channel service with the second application based on the data channel application certificate.

In this application, the certificate management server issues the reliable data channel application certificate to the first terminal, and the IMS network can learn of the data channel application certificate, to avoid manual installation/replacement of a third-party (provided by a non-communication network) certificate and use of an unreliable self-signed certificate by the first terminal, thereby providing reliable IMS data channel communication.

In some possible implementations, the first terminal may further send an address of the KMS to the certificate management server. In this way, the certificate management server can send the encrypted ticket and the identification information of the first application to the corresponding KMS based on the address of the KMS.

In some other possible implementations, the certificate management server may send the data channel application certificate and the identification information of the first application to the first terminal by using the AS. In this way, the first terminal can know that the received data channel application certificate is allocated to the first application, and further associate the data channel application certificate with the identification information of the first application for storage.

In some other possible implementations, the identification information of the first application may include: a terminal identifier of the first terminal; or a terminal identifier of the first terminal and an application identifier of the first application.

Optionally, the terminal identifier of the first terminal includes: a device identifier of the first terminal or a user identity of a user using the first terminal.

In this application, the terminal identifier may be a device identifier used for a terminal, for example, an international mobile subscriber identity (international mobile subscriber identity, IMSI) or an international mobile equipment identity (international mobile equipment identity, IMEI), or may be a user identity of a user using the terminal, for example, an internet protocol multimedia public identity (IP multimedia public identity, IMPU). The application identifier may be an application identifier (application identifier, AID).

In some other possible implementations, the encrypted ticket may include: the identification information of the first application. For example, the encrypted ticket may be implemented in a manner of a MIKEY (multimedia internet keying)-ticket.

Further, to improve reliability, the encrypted ticket may further include: a key index of a second key. The second key matches the first key, and the second key is allocated by the KMS to the first application.

In this application, the key index of the second key may be the second key itself, or may be the first key corresponding to the second key, an identifier of the second key, or the like. Certainly, the key index may be alternatively in another form, provided that the second key can be uniquely determined by using the key index of the second key.

According to a second aspect of the invention, this application provides an IMS data channel based communication method, including: A KMS obtains a first encrypted ticket and identification information of a first application from a certificate management server, where the identification information of the first application is used to identify the first application of a first terminal; the KMS decrypts the first encrypted ticket, to obtain identification information in the first encrypted ticket; the KMS verifies the first application based on the identification information and the identification information of the first application; and if the first application is successfully verified, the KMS sends a first key to the certificate management server, where the first key matches a second key allocated by the KMS to the first application, the first key is used by the certificate management server to generate a data channel application certificate for the first application, and the data channel application certificate is used by the first application to perform an IMS data channel service with a second application of a second terminal.

In some possible implementations, the KMS may determine whether the identification information matches the identification information of the first application. If the identification information matches the identification information of the first application, it indicates that the first application is successfully verified; or if the identification information does not match the identification information of the first application, it indicates that verification on the first application fails.

In this application, it is determined whether the identification information matches the identification information of the first application, to verify whether the identification information in the encrypted ticket is consistent with the identification information of the first application that sends the encrypted ticket, and further verify whether the first application is valid.

Further, to improve reliability, the first encrypted ticket may further include a key index. Correspondingly, the KMS may verify the first application based on the identification information, the key index, and the identification information of the first application.

In some other possible implementations, the KMS may determine whether the identification information matches the identification information of the first application. If the identification information matches the identification information of the first application, the KMS determines whether the key index matches the second key. If the key index matches the second key, it indicates that the first application is successfully verified. If the key index does not match the second key, it indicates that verification on the first application fails.

In some other possible implementations, before the KMS obtains the first encrypted ticket and the identification information of the first application from the certificate management server, the method may further include: The KMS receives a key request from the first terminal; in response to the key request, the KMS allocates the second key and a second encrypted ticket to the first application, where the second encrypted ticket includes the identification information of the first application, or the identification information of the first application and a key index of the second key; and the KMS sends the second key and the second encrypted ticket to the first terminal.

In some other possible implementations, the identification information of the first application includes: a terminal identifier of the first terminal; or a terminal identifier of the first terminal and an application identifier of the first application.

In some other possible implementations, the terminal identifier of the first terminal includes: a device identifier of the first terminal or a user identity of a user using the first terminal.

In some other possible implementations, the method may further include: The KMS establishes a communication channel with the first terminal by using an authentication mechanism (e.g. generic bootstrapping architecture, GBA).

According to a third aspect, which is not forming part of the invention but helps to highlight specific aspects of the invention, this application provides an IMS data channel based communication method, including: A first terminal sends an encrypted ticket and identification information of a first application to a certificate management server by using an AS, where the identification information of the first application is used to identify the first application of a first terminal; the first terminal receives, by using the AS, a data channel application certificate sent by the certificate management server, where the data channel application certificate is sent after the certificate management server successfully verifies the first application based on the encrypted ticket and the identification information of the first application; and the first terminal performs an IMS data channel service based on the data channel application certificate and a second application of a second terminal.

In some possible implementations, the method may further include: The first terminal sends an address of the KMS to the certificate management server by using the AS, where the address of the KMS is used to indicate the certificate management server to communicate with the KMS.

In some other possible implementations, the identification information of the first application includes: a terminal identifier of the first terminal; or a terminal identifier of the first terminal and an application identifier of the first application.

In some other possible implementations, the terminal identifier of the first terminal includes: a device identifier of the first terminal or a user identity of a user using the first terminal.

In some other possible implementations, before the first terminal sends the encrypted ticket and the identification information of the first application to the certificate management server, the method may further include: The first terminal requests the KMS for a key and the ticket; and the first terminal receives a second key and the encrypted ticket that are allocated by the KMS to the first application, where the encrypted ticket includes: the identification information of the first application, or the identification information of the first application and a key index of the second key.

In some other possible implementations, the data channel application certificate is generated by the certificate management server based on the first key, and the first key matches the second key. Correspondingly, when the second terminal successfully verifies the first application, the first terminal verifies the data channel application certificate through cooperation between the first key and the second key.

In some other possible implementations, the method may further include: The first terminal establishes a communication channel with the KMS by using a GBA.

According to a fourth aspect, which is not forming part of the invention but helps to highlight specific aspects of the invention, this application provides an IMS data channel based communication method, including: An AS receives an encrypted ticket and identification information of a first application from a first terminal, where the identification information of the first application is used to identify the first application of the first terminal; the AS sends the encrypted ticket and the identification information of the first application to a certificate management server; the AS receives a first data channel application certificate from the certificate management server, where the first data channel application certificate is allocated by the certificate management server to the first application, and the first data channel application certificate is used by the first application to perform an IMS data channel service with a second application of a second terminal; and the AS stores the first data channel application certificate, and sends the first data channel application certificate to the first terminal.

In this application, when the first terminal initiates the IMS data channel service, an IMS network may check whether certificate fingerprint information exchanged in a DTLS handshake process matches fingerprint information of a data channel application certificate delivered by the certificate management server, to refuse to use a data channel application certificate generated by a non-IMS network. Further, when secure communication of the terminal is ensured, the communication IMS network can also monitor reliability of the communication process.

In some possible implementations, the method may further include: The AS receives a second data channel application certificate allocated by the certificate management server to the second application, where the second data channel application certificate is used by the second application to perform an IMS data channel service with the first application; and the AS stores the second data channel application certificate, and sends the second data channel application certificate to the second terminal.

In some other possible implementations, the method may further include: The AS obtains a data channel application certificate from the first terminal and a data channel application certificate from the second terminal in a DTLS handshake process; the AS performs matching on the data channel application certificate from the first terminal and the first data channel application certificate; and the AS performs matching on the data channel application certificate from the second terminal and the second data channel application certificate. If the data channel application certificate from the first terminal matches the first data channel application certificate, and the data channel application certificate from the second terminal matches the second data channel application certificate, the AS allows the first application to establish an IMS data channel with the second application. If the data channel application certificate from the first terminal does not match the first data channel application certificate, and/or the data channel application certificate from the second terminal does not match the second data channel application certificate, the AS forbids the first application from establishing the IMS data channel with the second application.

According to a fifth aspect, which is not forming part of the invention but helps to highlight specific aspects of the invention, this application provides a communication apparatus. The communication apparatus may be a chip or a system-on-a-chip in a certificate management server, or may be a functional module that is in the certificate management server and that is configured to implement the method in the first aspect or any possible implementation of the first aspect. For example, the communication apparatus includes a first communication module, configured to receive an encrypted ticket and identification information of a first application from an AS, where the identification information of the first application is used to identify the first application of a first terminal; and a second communication module, configured to: send the encrypted ticket and the identification information of the first application to a KMS, where the encrypted ticket and the identification information of the first application are used by the KMS to verify the first application; and receive a first key, where the first key is sent after the KMS successfully verifies the first application. The first communication module is further configured to send a data channel application certificate corresponding to the first key to the AS, where the data channel application certificate is used by the first application to perform an IMS data channel service with a second application of a second terminal.

In some possible implementations, the first communication module is further configured to obtain an address of the KMS. The second communication module is further configured to send the encrypted ticket and the identification information of the first application to the KMS based on the address of the KMS.

In some other possible implementations, the first communication module is further configured to send the data channel application certificate and the identification information of the first application to the AS.

In some other possible implementations, the identification information of the first application includes: a terminal identifier of the first terminal; or a terminal identifier of the first terminal and an application identifier of the first application.

In some other possible implementations, the terminal identifier of the first terminal includes: a device identifier of the first terminal or a user identity of a user using the first terminal.

In some other possible implementations, the encrypted ticket includes: the identification information of the first application.

In some other possible implementations, the encrypted ticket further includes: a key index of a second key. The second key matches the first key, and the second key is allocated by the KMS to the first application.

According to a sixth aspect, which is not forming part of the invention but helps to highlight specific aspects of the invention, this application provides a communication apparatus. The communication apparatus may be a chip or a system-on-a-chip in a KMS, or may be a functional module that is in the KMS and that is configured to implement the method in the second aspect or any possible implementation of the second aspect. For example, the communication apparatus includes: a third communication module, configured to obtain first encrypted ticket and identification information of a first application from a certificate management server, where the identification information of the first application is used to identify the first application of a first terminal; and a first processing module, configured to: decrypt the first encrypted ticket, to obtain identification information in the first encrypted ticket; and verify the first application based on the identification information and the identification information of the first application. The third communication module is further configured to: if the first application is successfully verified, send a first key to the certificate management server, where the first key matches a second key allocated by the KMS to the first application, the first key is used by the certificate management server to generate a data channel application certificate for the first application, and the data channel application certificate is used by the first application to perform an IMS data channel service with a second application of a second terminal.

In some possible implementations, the first processing module is configured to determine whether the identification information matches the identification information of the first application. If the identification information matches the identification information of the first application, it indicates that the first application is successfully verified; or if the identification information does not match the identification information of the first application, it indicates that verification on the first application fails.

In some other possible implementations, the first encrypted ticket further includes a key index. The first processing module is configured to verify the first application based on the identification information, the key index, and the identification information of the first application.

In some other possible implementations, the first processing module is configured to: determine whether the identification information matches the identification information of the first application; and if the identification information matches the identification information of the first application, determine whether the key index matches the second key. If the key index matches the second key, it indicates that the first application is successfully verified; or if the key index does not match the second key, it indicates that verification on the first application fails.

In some other possible implementations, the communication apparatus further includes a fourth communication module, configured to: before the third communication module obtains the first encrypted ticket and the identification information of the first application from the certificate management server, receive a key request from the first terminal. The first processing module is further configured to: in response to the key request, allocate the second key and a second encrypted ticket to the first application, where the second encrypted ticket includes the identification information of the first application, or the identification information of the first application and a key index of the second key. The fourth communication module is further configured to send the second key and the second encrypted ticket to the first terminal.

In some other possible implementations, the identification information of the first application includes: a terminal identifier of the first terminal; or a terminal identifier of the first terminal and an application identifier of the first application.

In some other possible implementations, the terminal identifier of the first terminal includes: a device identifier of the first terminal or a user identity of a user using the first terminal.

In some other possible implementations, the fourth communication module is further configured to establish a communication channel with the first terminal by using a GBA.

According to a seventh aspect, which is not forming part of the invention but helps to highlight specific aspects of the invention, this application provides a communication apparatus. The communication apparatus may be a chip or a system-on-a-chip in a first terminal, or may be a functional module that is in the first terminal and that is configured to implement the method in the third aspect or any possible implementation of the third aspect. For example, the communication apparatus includes: a fifth communication module, configured to: send an encrypted ticket and identification information of a first application to an AS, where the identification information of the first application is used to identify the first application of a first terminal; and receive a data channel application certificate sent by the AS, where the data channel application certificate is sent after the certificate management server successfully verifies the first application based on the encrypted ticket and the identification information of the first application; and a sixth communication module, configured to perform an IMS data channel service with a second application of a second terminal based on the data channel application certificate.

In some possible implementations, the fifth communication module is further configured to send an address of the KMS to the AS, where the address of the KMS is used to indicate the certificate management server to communicate with the KMS.

In some other possible implementations, the identification information of the first application includes: a terminal identifier of the first terminal; or a terminal identifier of the first terminal and an application identifier of the first application.

In some other possible implementations, the terminal identifier of the first terminal includes: a device identifier of the first terminal or a user identity of a user using the first terminal.

In some other possible implementations, the communication apparatus may further include: a seventh communication module, further configured to: before the fifth communication module sends the encrypted ticket and the identification information of the first application to the AS, request the KMS for a key and the ticket; and receive a second key and the encrypted ticket that are allocated by the KMS to the first application, where the encrypted ticket includes: the identification information of the first application, or the identification information of the first application and a key index of the second key.

In some other possible implementations, the first terminal establishes a communication channel with the KMS by using a GBA.

In some other possible implementations, the data channel application certificate is generated by the certificate management server based on the first key, and the first key matches the second key. The sixth communication module is further configured to: when the second terminal successfully verifies the first application, verify the data channel application certificate through cooperation between the first key and the second key.

According to an eighth aspect, which is not forming part of the invention but helps to highlight specific aspects of the invention, this application provides a communication apparatus. The communication apparatus may be a chip or a system-on-a-chip in an AS, or may be a functional module that is in the AS and that is configured to implement the method in the fourth aspect or any possible implementation of the fourth aspect. For example, the communication apparatus includes an eighth communication module, configured to receive an encrypted ticket and identification information of a first application from a first terminal, where the identification information of the first application is used to identify the first application of the first terminal; a ninth communication module, configured to: send the encrypted ticket and the identification information of the first application to a certificate management server; and receive a first data channel application certificate from the certificate management server, where the first data channel application certificate is allocated by the certificate management server to the first application, and the first data channel application certificate is used by the first application to perform an IMS data channel service with a second application of a second terminal; and a second processing module, configured to store the first data channel application certificate. The eighth communication module is further configured to send the first data channel application certificate to the first terminal.

In some possible implementations, the ninth communication module is further configured to receive a second data channel application certificate allocated by the certificate management server to the second application, where the second data channel application certificate is used by the second application to perform an IMS data channel service with the first application. The second processing module is further configured to store the second data channel application certificate. The eighth communication module is further configured to send the second data channel application certificate to the second terminal.

In some other possible implementations, the eighth communication module is further configured to obtain a data channel application certificate from the first terminal and a data channel application certificate from the second terminal in a DTLS handshake process. The second processing module is further configured to: perform matching on the data channel application certificate from the first terminal and the first data channel application certificate; perform matching on the data channel application certificate from the second terminal and the second data channel application certificate; if the data channel application certificate from the first terminal matches the first data channel application certificate, and the data channel application certificate from the second terminal matches the second data channel application certificate, allow the first application to establish an IMS data channel with the second application; or if the data channel application certificate from the first terminal does not match the first data channel application certificate, and/or the data channel application certificate from the second terminal does not match the second data channel application certificate, forbid the first application from establishing the IMS data channel with the second application.

According to an aspect of the invention, this application provides a certificate management server, including a processor and a memory. The processor is coupled to the memory, and the processor is configured to read and execute instructions in the memory, to implement the IMS data channel based communication method in the first aspect and any possible implementation of the first aspect.

According an aspect of the invention, this application provides a KMS, including a processor and a memory. The processor is coupled to the memory, and the processor is configured to read and execute instructions in the memory, to implement the IMS data channel based communication method in the second aspect and any possible implementation of the second aspect.

According to an eleventh aspect, which is not forming part of the invention but helps to highlight specific aspects of the invention, this application provides a terminal, including a processor and a memory. The processor is coupled to the memory, and the processor is configured to read and execute instructions in the memory, to implement the IMS data channel based communication method in the third aspect and any possible implementation of the third aspect.

According to a twelfth aspect, which is not forming part of the invention but helps to highlight specific aspects of the invention, this application provides an AS, including a processor and a memory. The processor is coupled to the memory, and the processor is configured to read and execute instructions in the memory, to implement the IMS data channel based communication method in the fourth aspect and any possible implementation of the fourth aspect.

According to a thirteenth aspect, which is not forming part of the invention but helps to highlight specific aspects of the invention, this application provides a communication system, including a certificate management server, a KMS, and an AS. The certificate management server is configured to perform the IMS data channel based communication method in the first aspect and any possible implementation of the first aspect. The KMS is configured to perform the IMS data channel based communication method in the second aspect and any possible implementation of the second aspect. The AS is configured to perform the IMS data channel based communication method in the fourth aspect and any possible implementation of the fourth aspect.

According to a fourteenth aspect, which is not forming part of the invention but helps to highlight specific aspects of the invention, this application provides a computer-readable storage medium. The computer-readable storage medium stores instructions. When the instructions are run on a computer, the instructions are used to perform the IMS data channel based communication method in the first aspect, the second aspect, the third aspect, or the fourth aspect, and any possible implementation thereof.

According to a fifteenth aspect, which is not forming part of the invention but helps to highlight specific aspects of the invention, this application provides a computer program or a computer program product. When the computer program or the computer program product is executed on a computer, the computer is enabled to implement the IMS data channel based communication method in the first aspect, the second aspect, the third aspect, or the fourth aspect, and any possible implementation thereof.

It should be understood that, the technical solutions in the fifth to fifteenth aspects of this application are consistent with the technical solutions in the first to fourth aspects of this application, and beneficial effects obtained by the aspects and corresponding feasible implementations are similar. Details are not described again.

### BRIEF DESCRIPTION OF DRAWINGS

To describe technical solutions in embodiments of this application more clearly, the following describes the accompanying drawings used in embodiments or the background of this application.
FIG. 1 is a schematic diagram of a protocol stack of WebRTC according to an embodiment of this application;
FIG. 2 is a schematic diagram of secure transport protocols of different data types in an IMS according to an embodiment of this application;
FIG. 3 is a schematic diagram of an architecture of a communication system according to an embodiment of this application;
FIG. 4 is a schematic diagram of a ticket request procedure according to an embodiment of this application;
FIG. 5 is a schematic diagram of a certificate request procedure according to an embodiment of this application;
FIG. 6A and FIG. 6B are a schematic flowchart of an IMS data channel based communication method according to an embodiment of this application;
FIG. 7 is a schematic diagram of a structure of a communication apparatus according to an embodiment of this application;
FIG. 8 is a schematic diagram of another structure of a communication apparatus according to an embodiment of this application;
FIG. 9 is a schematic diagram of still another structure of a communication apparatus according to an embodiment of this application; and
FIG. 10 is a schematic diagram of hardware of a communication device according to an embodiment of this application.

### DESCRIPTION OF EMBODIMENTS

The following describes embodiments of this application with reference to the accompanying drawings in embodiments of this application. In the following description, reference is made to the accompanying drawings forming a part of this application and showing, in an illustrative manner, specific aspects of embodiments of the application or specific aspects of embodiments of this application that can be used. It should be understood that embodiments of this application may be used in other aspects, and may include structural or logical changes not depicted in the accompanying drawings. For example, it should be understood that the disclosed content with reference to the described method may also be applied to a corresponding device or system for performing the method, and vice versa. For example, if one or more specific method steps are described, a corresponding device may include one or more units such as a functional unit for performing the described one or more method steps (for example, one unit for performing the one or more steps; or a plurality of units, each of which performs one or more of a plurality of steps), even if such one or more units are not explicitly described or illustrated in the accompanying drawings. In addition, for example, if a specific apparatus is described based on one or more units such as a functional unit, a corresponding method may include one or more steps for implementing functionality of one or more units (for example, one step for implementing functionality of one or more units, or a plurality of steps, each of which is for implementing functionality of one or more units in a plurality of units), even if such one or more steps are not explicitly described or illustrated in the accompanying drawings. Further, it should be understood that features of various example embodiments and/or aspects described in this specification may be combined with each other, unless otherwise specified.

It is well known that browsers themselves do not support direct establishment of a channel between each other for communication, but are relayed by using a server. For example, at present, there are two clients: A and B. A and B want to communicate. First, A needs to establish a channel with a server, and B needs to establish a channel with the server. When A sends a message to B, A first sends the message to the server, and the server forwards the message of A to B, and vice versa. In this way, a message between A and B needs to pass through two channels, and the communication efficiency is limited by bandwidth of the two channels. In addition, such channels are not suitable for data stream transmission. How to establish point-to-point transmission between browsers has been bothering developers, and web real time communication (web real time communication, WebRTC) has come into being.

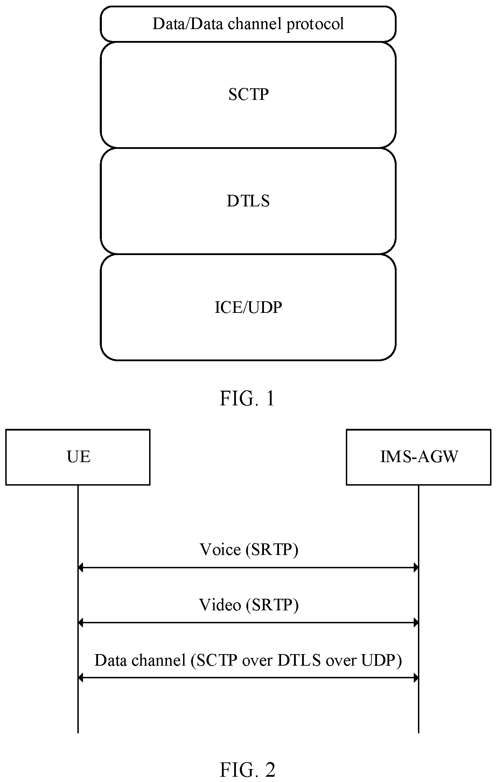

WebRTC is a technology that supports web browsers in performing a real-time voice or video conversation, and aims to enable browsers to provide a simple interface for real-time communication (RTC). In simple terms, WebRTC establishes a (peer-to-peer) channel between one browser and another by using a series of signaling. This channel can send any data without use of the server, to implement high-performance, low-latency, and point-to-point communication. FIG. 1 is a schematic diagram of a protocol stack of WebRTC according to an embodiment of this application. As shown in FIG. 1, a protocol stack used by a WebRTC data channel is a stream control transmission protocol over datagram transport layer security over user datagram protocol (stream control transmission protocol over datagram transport layer security over interactive connectivity establishment or user datagram protocol, SCTP over DTLS over ICE/UDP). The UDP at the bottom layer implements low-latency communication, the DTLS at the middle layer implements secure data channel communication, and finally the SCTP at the top layer supports establishing a plurality of streams (stream) with different reliability in one SCTP connection.

At present, with the development of technologies, a new concept: internet protocol multimedia subsystem (internet protocol multimedia subsystem, IMS) data channel, has emerged, and a main technical feature of the IMS data channel is that a 5th generation communication technology data channel (5G data channel) is superposed based on a voice service (e.g. voice service) of voice over long term evolution (voice over long term evolution, VoLTE), to upgrade IMS based real-time audio and video communication to real-time interaction, thereby enriching IMS-enabled service scenarios. Technically, the IMS data channel may be regarded as a newly added media type. The SCTP over DTLS over UDP used in WebRTC may be used as a bearer protocol. FIG. 2 is a schematic diagram of secure transport protocols of different data types in an IMS according to an embodiment of this application. As shown in FIG. 2, the IMS data channel uses the SCTP over DTLS over UDP, a voice (voice) service uses a secure real time transport protocol (secure time real transport protocol, SRTP), and a video (video) service also uses the SRTP. The SCTP over DTLS over UDP uses a security certificate verification mechanism, and the SRTP uses a security key verification mechanism.

However, if a security certificate used by the IMS data channel is autonomously generated or installed by a terminal or an IMS data channel application, a network side loses capabilities of controlling and monitoring communication content in the IMS data channel, and communication reliability is affected.

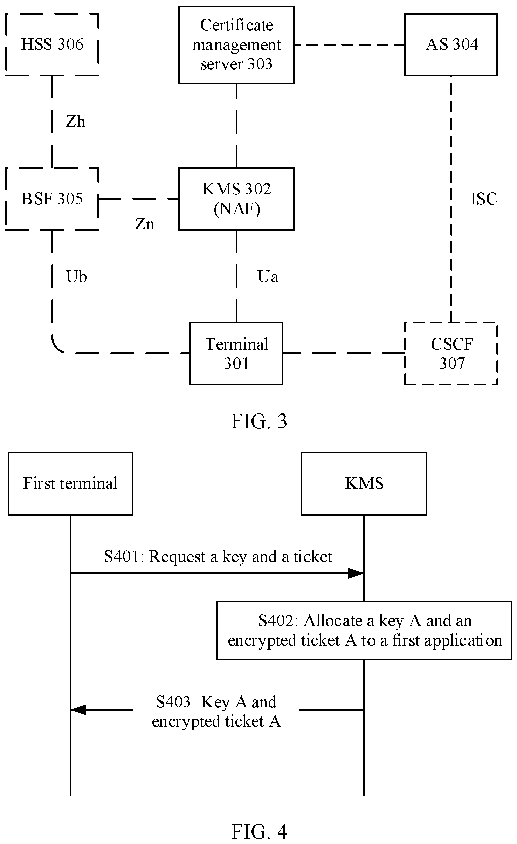

To resolve the foregoing problem, an embodiment of this application provides an IMS data channel based communication method. The method may be applied to a communication system, and the communication system may be used for real-time audio and video communication. FIG. 3 is a schematic diagram of an architecture of a communication system according to an embodiment of this application. As shown by solid lines in FIG. 3, the communication system 300 may include a terminal 301, a key management server (key management server, KMS) 302, a certificate management server 303, and an application server (application server, AS) 304.

A first terminal in the terminal 301 may be configured to: send an encrypted ticket (which may also be denoted as a first encrypted ticket) and identification information of a first application to the AS 304, where the encrypted ticket and the identification information of the first application are used by the certificate management server 303 to verify the first application; receive a data channel application certificate sent by the AS 304, where the data channel application certificate is sent after the certificate management server 303 successfully verifies the first application; and send the data channel application certificate to a second terminal in the terminal 301, where the data channel application certificate is used by the first application to perform an IMS data channel service with a second application of the second terminal in the terminal 301.

The second terminal may be configured to: verify the first application based on the data channel application certificate; if the first application is successfully verified, establish an IMS data channel with the first terminal; and obtain a first key based on the data channel application certificate, and verify the data channel application certificate of the first application through cooperation between the first key and a second key that is allocated by the KMS to the first application, so that the second application communicates with the first application in the IMS data channel; or if verification on the first application fails, end the process.

The KMS 302 may be configured to: obtain the encrypted ticket and the identification information of the first application from the certificate management server 303; decrypt the encrypted ticket to obtain an application identifier in the encrypted ticket; verify the first application based on the application identifier in the encrypted ticket and the identification information that is of the first application and that is sent by the certificate management server; if verification succeeds, send the first key to the certificate management server 303, where the first key matches the second key allocated by the KMS 302 to the first application, and the first key is used by the certificate management server 303 to generate a corresponding data channel application certificate (which may also be denoted as a first data channel application certificate), and the data channel application certificate may be used by the first application to perform an IMS data channel service with the second application.

The certificate management server 303 may be configured to: send the encrypted ticket and the identification information of the first application to the AS 304, where the encrypted ticket and the identification information of the first application are used by the KMS 302 to verify the first application; receive the first key, where the first key is sent after the KMS 302 successfully verifies the first application; and send the data channel application certificate corresponding to the first key to the AS 304, where the data channel application certificate is used by the first application to perform the IMS data channel service with the second application.

It should be noted that, the first terminal and/or the second terminal in this embodiment of this application are terminal devices with a wireless communication function, and may be deployed on land, including indoor or outdoor, handheld, wearable, or vehicle-mounted terminal devices, or may be deployed on the water surface (such as a ship); or may be deployed in air (for example, airplanes, balloons, and satellites). The foregoing terminal device may be a mobile phone (mobile phone), a tablet computer (Pad), a computer with a wireless transceiver function, a virtual reality (virtual reality, VR) terminal apparatus, an augmented reality (augmented reality, AR) terminal apparatus, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal device may be alternatively a handheld device, a vehicle-mounted device, a wearable device, or a computing device that has a wireless communication function, another processing device connected to a wireless modem, or the like. A terminal apparatus may have different names in different networks, for example, the terminal apparatus, an access terminal, a subscriber unit, a subscriber station, a mobile station, a mobile console, a remote station, a remote terminal, a mobile device, a user terminal, a terminal, a wireless communication device, a user agent or user apparatus, a cellular phone, a cordless telephone set, a session initiation protocol (session initiation protocol, SIP) phone, a wireless local loop (wireless local loop, WLL) station, a personal digital assistant (personal digital assistant, PDA), a terminal device in a 5G network or a future evolved network, or the like. In actual application, browser applications need to be installed in the first terminal and the second terminal. In this way, the first terminal and the second terminal may implement real-time audio and video interaction by using an IMS data channel between the browser applications.

The KMS may be deployed on a network application function (network application function, NAF), or may be deployed on a third-party server. The KMS may authenticate the terminal 301 by using an authentication mechanism (e.g. generic bootstrapping architecture, GBA), and perform secure communication with the terminal 301 after authentication on the terminal 301 succeeds. For example, if the KMS 302 is deployed on the NAF, and the terminal 301 is connected to the NAF through a Ua interface, as shown by dashed lines in FIG. 3, the terminal 301 is connected, through a Ub interface, to a bootstrapping server function (bootstrapping server function, BSF) 305 in a network to which the terminal 301 belongs, the KMS 302 is connected, through a Zn interface, to the BSF 305 in the network to which the KMS 302 belongs, and the BSF 305 is connected to a home subscriber server (home subscriber server, HSS) 306 through a Zh interface.

In some possible implementations, still referring to the dashed lines in FIG. 3, the communication network may further include a call session control function (call session control function, CSCF) 307 in an IMS network. The terminal 301 may be connected to the CSCF 307, the CSCF 307 is connected to the AS 304 through an IMS service control (IMS service control, ISC) interface, the AS 304 is connected to the certificate management server 303, and the terminal 301 may send a message to the certificate management server 303 by using the CSCF 307 and the AS 304. The CSCF 307 interacts with the AS 304 by using a standard session initiation protocol (session initiation protocol, SIP).

In actual application, the CSCF may be classified into a P-CSCF (a proxy CSCF) and an S-CSCF (a serving CSCF).

The following describes an IMS data channel based communication method provided in embodiments of this application with reference to the structure of the foregoing communication system.

FIG. 4 is a schematic diagram of a ticket request procedure according to an embodiment of this application. As shown in FIG. 4, the method may include the following steps.

S401: A first terminal requests a KMS for a key and a ticket (ticket).

When a first application of the first terminal, such as a live broadcast application or a video call application, needs to perform IMS data channel communication with a second application of a second terminal, first, the first terminal may send a REQUEST_INIT message to the KMS, to request for the key and the ticket corresponding to the first application. The REQUEST_INIT message may carry identification information of the first application.

In some possible implementations, the identification information of the first application may uniquely identify the first application of the first terminal. In this case, the identification information of the first application may include a terminal identifier of the first terminal, or a terminal identifier of the first terminal and an application identifier of the first application. For example, if only one application (namely, the first application) in the first terminal requests the KMS for the key and the ticket within a same time, the REQUEST _INIT message may carry the terminal identifier (for example, #UE A) of the first terminal. If a plurality of applications including the first application in the first terminal request the KMS for the key and the ticket within a same time, the REQUEST_INIT message may carry the terminal identifier (for example, #UE A) of the first terminal and an application identifier (for example, #APP A) of one application (for example, the first application) in the plurality of applications; or the REQUEST_INIT message may carry the terminal identifier (for example, #UE A) of the first terminal and application identifiers (for example, #APP 1, #APP 2, ..., #APP n) of the plurality of applications.

In actual application, the terminal identifier in this embodiment of this application may be a device identifier used for a terminal, for example, an international mobile subscriber identity (international mobile subscriber identity, IMSI) or an international mobile equipment identity (international mobile equipment identity, IMEI), or may be a user identity of a user using the terminal, for example, an internet protocol multimedia public identity (IP multimedia public identity, IMPU). The application identifier may be an application identifier (application identifier, AID). Certainly, identifiers in other forms may exist. This is not specifically limited in this embodiment of this application.

In some possible implementations, before S401, the method may further include: The first terminal establishes a communication channel with the KMS by using a GBA.

First, the first terminal initiates a GBA initialization request to a BSF. The BSF obtains authentication information of the first terminal from an HSS, and generates a shared key Ks and a transaction identifier of the first terminal. The BSF sends the authentication information and the transaction identifier of the first terminal to the first terminal, and the first terminal performs corresponding processing on the authentication information and the transaction identifier and then stores the authentication information and the transaction identifier. The first terminal carrying the transaction identifier initiates an authentication request to the KMS (namely, the NAF). The KMS checks whether the KMS stores a valid key, and if the KMS does not store a valid key, the KMS carrying the transaction identifier requests the BSF for Ks, and the KMS and the first terminal perform authentication on Ks. After the authentication succeeds, the first terminal obtains Ks. Further, the first terminal derives, based on Ks, a key Ks_NAF for accessing the KMS by the first terminal, and subsequent communication between the first terminal and the KMS may be encrypted and protected by using Ks_NAF.

S402: The KMS allocates a key A (namely, a second key) and an encrypted ticket A to the first application.

The KMS receives the REQUEST_INIT message (carrying the identification information of the first application) from the first terminal, and in response to the REQUEST _INIT message, allocates the corresponding key A and encrypted ticket A to the first application based on the identification information of the first application. Only the KMS knows an encryption mechanism of the encrypted ticket A.

Herein, the key A may be used to perform encrypted communication between the first application and the second application in the IMS data channel. Optionally, the key A may be a private key.

The encrypted ticket A is used by another network element in a communication network to verify the first application. Optionally, the encrypted ticket A may include the identification information of the first application.

Further, to improve reliability, the encrypted ticket A may further include a key index of the key A. In some possible implementations, the key index of the key A may be the key A itself, or may be a key B (a public key) corresponding to the key A, or an identifier of the key A, or the like. Certainly, the key index may be alternatively in another form, provided that the key A can be uniquely determined by using the key index of the key A. This is not specifically limited in this embodiment of this application.

S403: The KMS sends the key A and the encrypted ticket A to the first terminal.

The KMS sends a REQUEST _RESP message to the first terminal, and adds the key A and the encrypted ticket A to the REQUEST_RESP message.

The ticket request (ticket request) procedure is described above.

In some possible implementations, when the first application needs to perform encrypted communication with the second application by using the IMS data channel, the first terminal first needs to establish the IMS data channel between the first terminal and the second terminal, and before establishing the data channel, the first terminal needs to first apply to a certificate management server for a data channel application certificate used for the IMS data channel service.

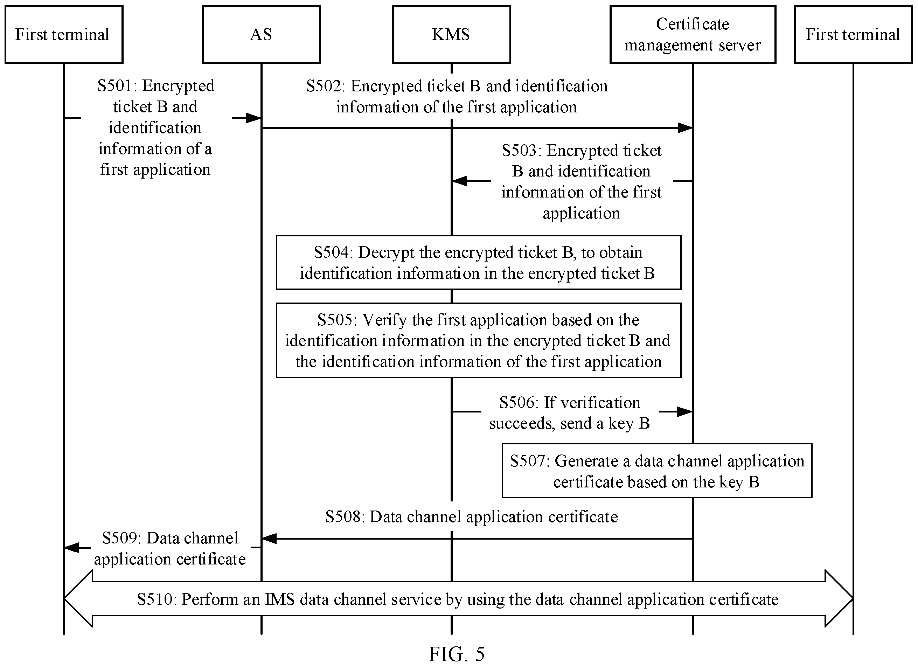

In this case, FIG. 5 is a schematic diagram of a certificate request procedure according to an embodiment of this application. As shown in FIG. 5, after S401 to S403, the method may include the following steps.

S501: The first terminal sends an encrypted ticket B and the identification information of the first application to an AS.

The first terminal may send a SIP message to the AS, where the SIP message may carry the encrypted ticket B and the identification information of the first application, and then, the AS adds the encrypted ticket B and the identification information of the first application to a hypertext transfer protocol secure (hyper text transfer protocol secure, HTTPS) message, and sends the HTTPS message to the certificate management server. It may be understood that, because the first terminal has not been verified, the encrypted ticket B may be the same as the encrypted ticket A (that is, the first application is valid), or may be different from the encrypted ticket A (that is, the first application is invalid).

It should be noted that, in this embodiment of this application, the identification information of the first application is sent as plaintext.

Optionally, the identification information of the first application may include the terminal identifier of the first terminal, for example, the IMSI of the first terminal, or may include the application identifier of the first application, for example, the AID. In this case, the identification information of the first application may be a combination of the IMSI and the AID.

It should be noted that, in this embodiment of this application, that the first application is valid means that the first application is valid with respect to the IMS data channel between the first application and the second application. The first application may perform reliable encrypted communication on an IMS data channel with the second application by using the IMS data channel. Similarly, that the first application is invalid means that the first application is invalid with respect to the IMS data channel between the first application and the second application, and the first application cannot perform encrypted communication on the IMS data channel with the second application. However, at the same time, the first application may also be valid with respect to another IMS data channel between the first terminal and the second terminal. It can be learned from the foregoing description that, for different applications, the validity of the application is relative to the IMS data channel. In this way, reliability of encrypted communication on each IMS data channel can be ensured.

In actual application, S501 may include: The first terminal sends a certificate request to the AS, where the AS may add the identification information of the first application to a field of the certificate request to be forwarded to the certificate management server. In this case, the first terminal may skip a step of sending the identification information of the first application. In other words, the first terminal may send only the encrypted ticket B to the AS, and the AS autonomously sends the encrypted ticket B and the identification information of the first application to the certificate management server. In this case, the first terminal has been registered in the IMS network.

Specifically, the first terminal may first send the encrypted ticket B to the S-CSCF, then the S-CSCF forwards the encrypted ticket B to the AS, and then the AS forwards the identification information of the first application (for example, the terminal identifier of the first terminal) and the encrypted ticket B to the certificate management server.

For example, the first terminal may send the encrypted ticket B to the S-CSCF by using the following MESSAGE request message:

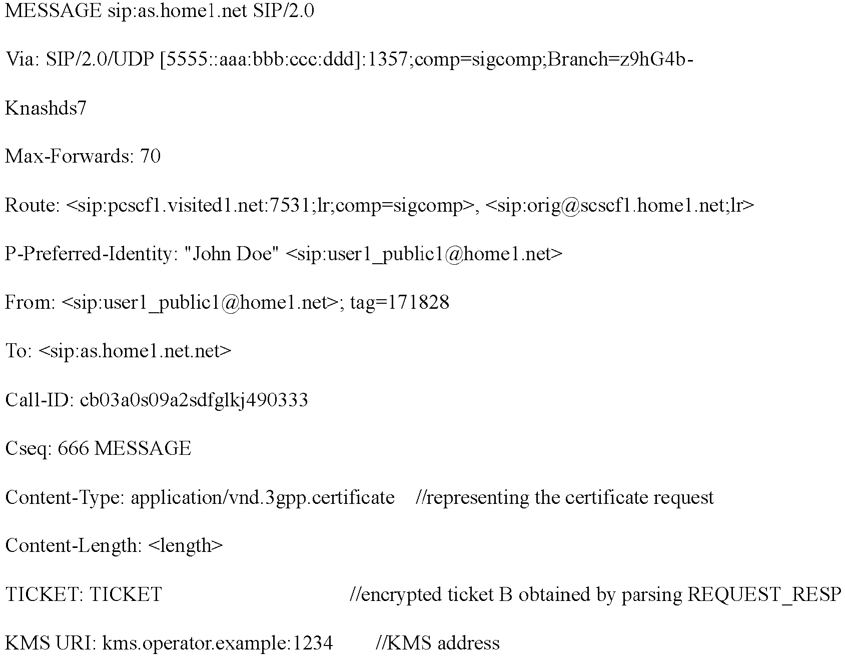

S502: The AS sends the encrypted ticket B and the identification information of the first application to the certificate management server.

Further, the first terminal may further send the KMS address to the AS, and the AS forwards the KMS address to the certificate management server, so that the certificate management server can communicate with the corresponding KMS based on the KMS address. Optionally, the certificate request may further carry the KMS address.

S503: The certificate management server sends the encrypted ticket B and the identification information of the first application to the KMS.

In some possible implementations, the certificate management server may send the encrypted ticket B and the identification information of the first application to the corresponding KMS based on the KMS address sent by the first terminal.

In actual application, the certificate management server sends a decryption request to the KMS, where the decryption request may carry the encrypted ticket B and the identification information of the first application.

S504: The KMS decrypts the encrypted ticket B, and obtains identification information in the encrypted ticket B.

Herein, the identification information in the encrypted ticket B may include a terminal identifier, or a terminal identifier and an application identifier. It may be understood that, because the encrypted ticket B is a to-be-verified ticket, the terminal identifier may be the terminal identifier of the first terminal, or may not be the terminal identifier of the first terminal. Similarly, the application identifier in the encrypted ticket B may be the application identifier of the first application, or may not be the application identifier of the first application.

S505: The KMS verifies the first application based on the identification information in the encrypted ticket B and the identification information of the first application; if the first application is successfully verified, performs S506, or if verification on the first application fails, ends the process.

After decrypting the encrypted ticket B, the KMS obtains the identification information, for example, the terminal identifier. Then, the KMS may perform matching on the terminal identifier and the terminal identifier of the first terminal in the identification information that is of the first application and that is sent by the certificate management server, to verify whether the terminal identifier in the encrypted ticket B is consistent with the terminal identifier of the first terminal sending the encrypted ticket B. If the terminal identifier in the encrypted ticket B is consistent with (or matches) the terminal identifier of the first terminal sending the encrypted ticket B, it indicates that the first application is successfully verified, that is, the first application is valid; or otherwise, if the terminal identifier in the encrypted ticket B is inconsistent with (or does not match) the terminal identifier of the first terminal sending the encrypted ticket B, it indicates that verification on the first application fails, that is, the first application is invalid.

Certainly, after the KMS decrypts the encrypted ticket B, the obtained identification information may further include the terminal identifier and the application identifier. Then, the KMS respectively performs matching on the terminal identifier and the application identifier and the terminal identifier of the first terminal and the application identifier of the first application that are in the identification information of the first application, to verify whether the terminal identifier in the encrypted ticket B is consistent with the identification information of the first application sending the encrypted ticket B. If the terminal identifier in the encrypted ticket B is consistent with (matches) the identification information of the first application sending the encrypted ticket B, it indicates that the first application is successfully verified, that is, the first application is valid; or otherwise, if the terminal identifier in the encrypted ticket B is inconsistent with (or does not match) the identification information of the first application sending the encrypted ticket B, it indicates that verification on the first application fails, that is, the first application is invalid.

In this embodiment of this application, to further improve communication reliability, the encrypted ticket B may further include a key index. In this case, S505 may include: The KMS verifies the first application based on the identification information and the key index in the encrypted ticket B, and the identification information of the first application.

The KMS first performs matching on the identification information in the encrypted ticket B and the identification information of the first application. If the identification information in the encrypted ticket B is consistent with (or matches) the identification information of the first application, the KMS performs matching on the key index in the encrypted ticket B and the key A allocated to the first application in S402. For example, assuming that the key index is the key itself, the key is compared with the key A, to determine whether the key is consistent with the key A; or, assuming that the key index is an identifier corresponding to the key, it is determined whether the key corresponding to the identifier is the key A. If the key corresponding to the identifier is consistent with (or matches) the key A, it indicates that the first application is successfully verified, that is, the first application is valid; or otherwise, if the key corresponding to the identifier is inconsistent with (or does not match) the key A, it indicates that verification on the first application fails, that is, the first application is invalid.

Certainly, the encrypted ticket B may further include other information. This is not specifically limited in this embodiment of this application.

In some possible implementations, after S504, if verification on the first application fails, the KMS considers that the first application is invalid, and then the KMS notifies the certificate management server, so that the certificate management server rejects the certificate request of the first terminal.

S506: The KMS sends the key B (namely, the first key) to the certificate management server.

Herein, the key B matches the key A allocated by the KMS to the first application in S402. It may be understood that if the key A is a private key, the key B may be a matched public key.

S507: The certificate management server generates a data channel application certificate based on the key B.

S508: The certificate management server sends the data channel application certificate to the AS.

S509: The AS sends the data channel application certificate to the first terminal.

The certificate management server sends both the generated data channel application certificate and the identification information of the first application to the AS, and then the AS sends both the data channel application certificate and the identification information of the first application to the first terminal. In this way, the first terminal can know that the received data channel application certificate is allocated to the first application, and further associate the data channel application certificate with the identification information of the first application for storage. In actual application, the AS first forwards the data channel application certificate and the identification information of the first application to the S-CSCF, and then the S-CSCF forwards the data channel application certificate and the identification information of the first application to the first terminal.

For example, the AS may forward the data channel application certificate to the S-CSCF by using the following 200 (OK) response message:

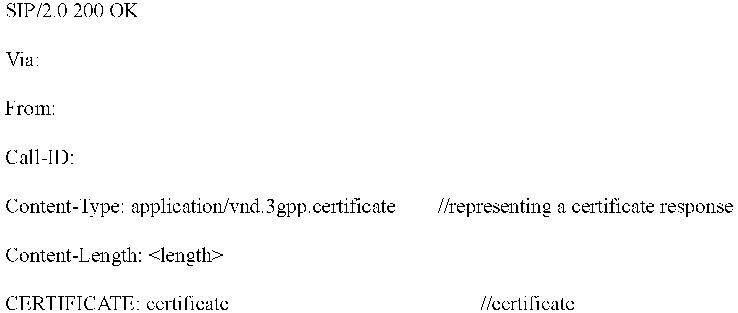

It should be noted that, in S508, after receiving the data channel application certificate from the certificate management server, the AS may store the data channel application certificate and an association relationship between the data channel application certificate and the application, so as to subsequently determine whether to allow the first application to establish an IMS data channel with the second application.

S510: The first terminal performs an IMS data channel service with the second application of the second terminal by using the data channel application certificate.

It should be noted that, the IMS data channel service may be one or more services that are related to the IMS data channel and that are between the first application and the second application, for example, verifying the first application, determining whether establishment of the IMS data channel between the first application and the second application is allowed, establishing the IMS data channel between the first application and the second application, and performing encrypted communication between the first application and the second application on the IMS data channel. Certainly, other services may be further included. This is not specifically limited in this embodiment of this application.

For example, in S510, after obtaining the data channel application certificate by performing S507, the first terminal may send the data channel application certificate to the second terminal. After receiving the data channel application certificate, the second terminal may verify the data channel application certificate based on the key A and the key B, and after the verification succeeds, the second terminal performs encrypted communication with the first terminal on the IMS data channel, to verify whether the first application is allowed to perform encrypted communication by using the IMS data channel. If the first application is successfully verified, the second terminal determines that the first application is valid. In this case, the second terminal establishes the IMS data channel between the first application and the second application with the first terminal, and performs encrypted communication on the IMS data channel. Otherwise, if verification on the first application fails, the second terminal determines that the first application is invalid. In this case, the second terminal may reject to establish the IMS data channel between the first application and the second application with the first terminal.

The certificate application procedure is completed at this point.

For example, it is assumed that an APP 1 (the first application) of UE A (the first terminal) needs to perform an IMS data channel service with an APP 2 of UE B (the second terminal) within a same time. Herein, the APP 1 and the APP 2 may be a same application on different terminals. In this case, application identifiers of the APP 1 and the APP 2 are the same, that is, #APP 1. For example, the APP 1 is a video call application, and the APP 2 is a same video call application. Alternatively, the APP 1 and the APP 2 may be applications that match each other on different terminals. For example, the APP 1 is a host-end application, and the APP 2 is a client-end application. In this case, the application identifiers of the APP 1 and the APP 2 may have at least a same part. For example, the application identifier of the APP 1 may be #X-APP 1, and the application identifier of the APP 2 may be #X-APP 2. The following uses an example in which the APP 1 and the APP 2 have a same application identifier #APP 1.

Step 1: The UE A and the UE B each apply for a key and an encrypted ticket from the KMS. The KMS allocates the key A (the private key) and the encrypted ticket A to the APP 1.

Step 2: The UE A sends a certificate request to the AS, where the certificate request carries the encrypted ticket A, the KMS address, and the application identifier (#APP 1) of the APP 1. Because the UE A has registered in the IMS network, after receiving the certificate request, the AS forwards the certificate request to the certificate management server. The certificate request carries the encrypted ticket A, the KMS address, the terminal identifier (#UE A) of the UE, and #APP 1.

Step 3: After receiving the certificate request, the certificate management server sends a parsing request to the KMS based on the KMS address, to request the KMS to parse the encrypted ticket A, where the parsing request carries the encrypted ticket A, #UE A, and #APP 1.

Step 4: After receiving the parsing request, the KMS parses the encrypted ticket A to obtain #UE A and #APP 1 in the encrypted ticket A, and then the KMS compares #UE A and #APP 1 in the encrypted ticket A respectively with #UE A and #APP 1 carried in the parsing request. If #UE A and #APP 1 in the encrypted ticket A are consistent with #UE A and #APP 1 carried in the parsing request, the KMS sends the key B (that is, a public key of the key A) corresponding to #UE A and #APP 1 to the certificate management server.

Step 5: The certificate management server may generate, based on the key B, the data channel application certificate corresponding to the first application, and then send the data channel application certificate corresponding to the first application, #UE A, and #APP 1 to the AS.

Step 6: The AS stores the data channel application certificate corresponding to the first application, #UE A, and #APP 1, and forwards the data channel application certificate corresponding to the first application, #UE A, and #APP 1 to the UE A.

Further, the foregoing step 1 to step 6 are also performed on the UE B. The AS stores the data channel application certificate corresponding to the second application, #UE B, and #APP 1, and forwards the data channel application certificate corresponding to the second application, #UE B, and #APP 1 to the UE B.

Step 7: The UE A sends, to the AS, an SDP Offer or a SIP message MESSAGE A to which the SDP Offer is attached, where the MESSAGE A carries #UE A and #APP 1.

Step 8: The AS obtains #UE A and #APP 1 from the MESSAGE A, and determines, based on #UE A and #APP 1, whether to allow the UE A to transmit data of the APP 1 on the IMS data channel. If it is determined to allow the UE A to transmit the data of the APP 1 on the IMS data channel, the AS forwards the MESSAGE A to the UE B, and indicates the UE B to allow the UE A to transmit the data of the APP 1 on the IMS data channel, or otherwise, if it is determined to forbid the UE A from transmitting the data of the APP 1 on the IMS data channel, when the AS forwards the MESSAGE A to the UE B, #APP 1 is deleted.

Step 9: The AS receives, from the UE B, an SDP Answer or a SIP message MESSAGE B to which the SDP Answer is attached, where the MESSAGE B carries #UE B and #APP 1; then, when forwarding the MESSAGE B, the AS indicates, to the UE A, whether to allow the UE A to transmit the data of the APP 1 on the IMS data channel. Further, the AS establishes an IMS data channel for the APP 1 of the UE A and the APP 2 of the UE B.

Step 10: The UE A determines, according to the indication, whether the UE A is allowed to transmit the data of the APP 1 on the IMS data channel. If it is determined that the UE A is allowed to transmit the data of the APP 1 on the IMS data channel, the UE A sends, on the IMS data channel, encrypted data of the APP 1 to the UE B.

Step 11: The UE B obtains the data of the APP 1 through decryption.

In this embodiment of this application, the certificate management server issues the reliable data channel application certificate to the first terminal, and the IMS network can learn of the data channel application certificate, to avoid manual installation/replacement of a third-party (provided by a non-communication network) certificate and use of an unreliable self-signed certificate by the first terminal, thereby providing reliable IMS data channel communication.

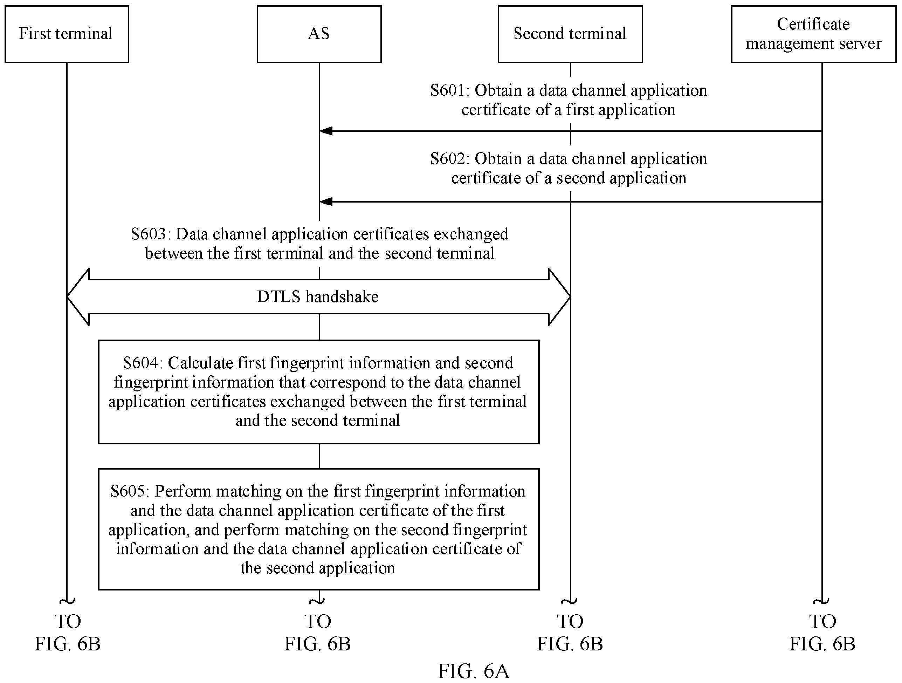

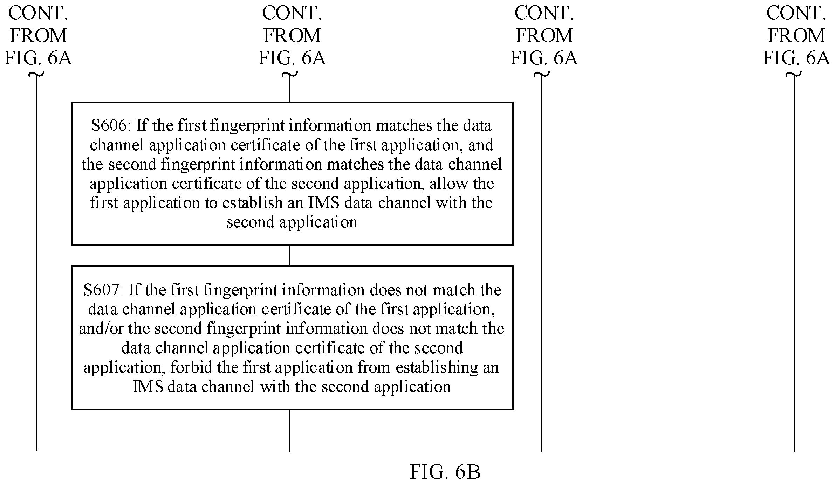

In some possible embodiments, after obtaining the data channel application certificate by performing S501 to S510, the first terminal may initiate an IMS data channel service by using the certificate. In this process, the IMS network wants to monitor the IMS data channel service of the first terminal and the second terminal, so as to prevent the first terminal and the second terminal from autonomously communicating by bypassing the IMS network. In this case, FIG. 6A and FIG. 6B are a schematic flowchart of an IMS data channel based communication method according to an embodiment of this application. As shown in FIG. 6A and FIG. 6B, after S508, the method may include the following steps.

S601: The AS obtains the data channel application certificate of the first application.

Herein, by performing S501 to S508, the certificate management server allocates the data channel application certificate to the first application, and sends the data channel application certificate to the first terminal by using the AS. In this process, the AS stores the data channel application certificate of the first application.

S602: The AS obtains the data channel application certificate of the second application.

Herein, by performing S501 to S508, the certificate management server allocates the data channel application certificate to the second application, and sends the data channel application certificate to the second terminal by using the AS. In this process, the AS stores the data channel application certificate of the second application.

It should be noted that the data channel application certificate of the first application and/or the data channel application certificate of the second application are/is used by the first application to perform an IMS data channel service with the second application.

S603: The AS obtains, in a DTLS handshake process, data channel application certificates exchanged between the first terminal and the second terminal.

Herein, in the DTLS handshake process, both the first terminal and the second terminal send the data channel application certificates to the AS to exchange the certificates. In this case, the data channel application certificates exchanged may be the data channel application certificates obtained by the first application and the second application by performing S501 to S510, or may be data channel application certificates provided by a third party (a non-communication network).

S604: The AS calculates first fingerprint information and second fingerprint information that correspond to the data channel application certificates exchanged between the first terminal and the second terminal.

The AS obtains, by using the DTLS process, the data channel application certificates exchanged between the first terminal and the second terminal, for example, the data channel application certificate from the first terminal and the data channel application certificate from the second terminal, and then separately calculates fingerprint information of the two certificates, to obtain the first fingerprint information and the second fingerprint information.

S605: The AS performs matching on the first fingerprint information and the data channel application certificate of the first application, and performs matching on the second fingerprint information and the data channel application certificate of the second application; if the first fingerprint information matches the data channel application certificate of the first application, and the second fingerprint information matches the data channel application certificate of the second application, the AS determines that a user of the IMS data channel is an authorized user, and performs S606; or if the first fingerprint information does not match the data channel application certificate of the first application, and/or the second fingerprint information does not match the data channel application certificate of the second application, the AS performs S607.

S606: The AS allows the first application to establish the IMS data channel with the second application.

S607: The AS forbids the first application from establishing the IMS data channel with the second application.

Further, that the AS performs matching on the fingerprint information and the data channel application certificates in S605 may include: The AS calculates the fingerprint information corresponding to the data channel application certificates, and then compares the fingerprint information obtained through calculation with the fingerprint information corresponding to the data channel application certificates exchanged in the DTLS handshake process, to determine whether the fingerprint information obtained through calculation is consistent with the fingerprint information corresponding to the data channel application certificates exchanged in the DTLS handshake process. If the fingerprint information obtained through calculation is consistent with the fingerprint information corresponding to the data channel application certificates exchanged in the DTLS handshake process, it indicates that the fingerprint information obtained through calculation matches the fingerprint information corresponding to the data channel application certificates exchanged in the DTLS handshake process. Otherwise, if the fingerprint information obtained through calculation is inconsistent with the fingerprint information corresponding to the data channel application certificates exchanged in the DTLS handshake process, it indicates that the fingerprint information obtained through calculation does not match the fingerprint information corresponding to the data channel application certificates exchanged in the DTLS handshake process.

It should be noted that, the foregoing fingerprint information may be digest information obtained by calculating the data channel application certificates.

In this embodiment of this application, when the first terminal initiates the IMS data channel service, an IMS network may check whether certificate fingerprint information exchanged in a DTLS handshake process matches fingerprint information of a data channel application certificate delivered by the certificate management server, to refuse to use a data channel application certificate generated by a non-IMS network. Further, when secure communication of the terminal is ensured, the communication IMS network can also monitor reliability of the communication process.

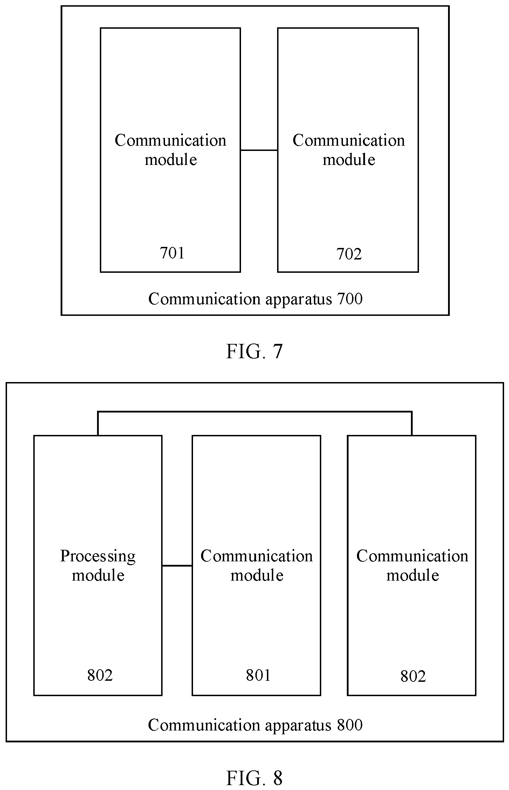

Based on a same inventive concept, an embodiment of this application provides a communication apparatus. The communication apparatus may be a chip or a system-on-a-chip in a certificate management server, or may be a functional module that is in the certificate management server and that is configured to implement the method in any one of the foregoing possible implementations. For example, FIG. 7 is a schematic diagram of a structure of a communication apparatus according to an embodiment of this application. As shown in FIG. 7, the communication apparatus 700 includes a communication module 701, configured to receive an encrypted ticket and identification information of a first application from an AS, where the identification information of the first application is used to identify the first application of a first terminal; and a communication module 702, configured to: send the encrypted ticket and the identification information of the first application to a KMS, where the encrypted ticket and the identification information of the first application are used by the KMS to verify the first application; and receive a first key, where the first key is sent after the KMS successfully verifies the first application. The communication module 701 is further configured to send a data channel application certificate corresponding to the first key to the AS, where the data channel application certificate is used by the first application to perform an IMS data channel service with a second application of a second terminal.

In some possible implementations, the communication module 701 is further configured to obtain an address of the KMS. The communication module 702 is further configured to send the encrypted ticket and the identification information of the first application to the KMS based on the address of the KMS.

In some other possible implementations, the communication module 701 is further configured to send the data channel application certificate and the identification information of the first application to the AS.

In some other possible implementations, the identification information of the first application includes: a terminal identifier of the first terminal; or a terminal identifier of the first terminal and an application identifier of the first application.

In some other possible implementations, the terminal identifier of the first terminal includes: a device identifier of the first terminal or a user identity of a user using the first terminal.

In some other possible implementations, the encrypted ticket includes: the identification information of the first application.

In some other possible implementations, the encrypted ticket further includes: a key index of a second key. The second key matches the first key, and the second key is allocated by the KMS to the first application.

Based on a same inventive concept, an embodiment of this application provides a communication apparatus. The communication apparatus may be a chip or a system-on-a-chip in a KMS, or may be a functional module that is in the KMS and that is configured to implement the method in any one of the foregoing possible implementations. For example, FIG. 8 is a schematic diagram of another structure of a communication apparatus according to an embodiment of this application. As shown in FIG. 8, the communication apparatus 800 may include a communication module 801, configured to obtain first encrypted ticket and identification information of a first application from a certificate management server, where the identification information of the first application is used to identify the first application of a first terminal; and a processing module 802, configured to: decrypt the first encrypted ticket, to obtain identification information in the first encrypted ticket; and verify the first application based on the identification information and the identification information of the first application. The communication module 801 is further configured to: if the first application is successfully verified, send a first key to the certificate management server, where the first key matches a second key allocated by the KMS to the first application, the first key is used by the certificate management server to generate a data channel application certificate for the first application, and the data channel application certificate is used by the first application to perform an IMS data channel service with a second application of a second terminal.

In some possible implementations, the processing module 802 is configured to determine whether the identification information matches the identification information of the first application. If the identification information matches the identification information of the first application, it indicates that the first application is successfully verified; or if the identification information does not match the identification information of the first application, it indicates that verification on the first application fails.

In some other possible implementations, the first encrypted ticket further includes a key index. The first processing module is configured to verify the first application based on the identification information, the key index, and the identification information of the first application.

In some other possible implementations, the processing module 802 is configured to: determine whether the identification information matches the identification information of the first application; and if the identification information matches the identification information of the first application, determine whether the key index matches the second key. If the key index matches the second key, it indicates that the first application is successfully verified; or if the key index does not match the second key, it indicates that verification on the first application fails.

In some other possible implementations, still referring to FIG. 8, the communication apparatus 800 further includes a communication module 803, configured to: before the communication module 801 obtains the first encrypted ticket and the identification information of the first application from the certificate management server, receive a key request from the first terminal. The processing module 802 is further configured to: in response to the key request, allocate the second key and a second encrypted ticket to the first application, where the second encrypted ticket includes the identification information of the first application, or the identification information of the first application and a key index of the second key. The communication module 803 is further configured to send the second key and the second encrypted ticket to the first terminal.

In some other possible implementations, the identification information of the first application includes: a terminal identifier of the first terminal; or a terminal identifier of the first terminal and an application identifier of the first application.

In some other possible implementations, the terminal identifier of the first terminal includes: a device identifier of the first terminal or a user identity of a user using the first terminal.

In some other possible implementations, the communication module 803 is further configured to establish a communication channel with the first terminal by using a GBA.

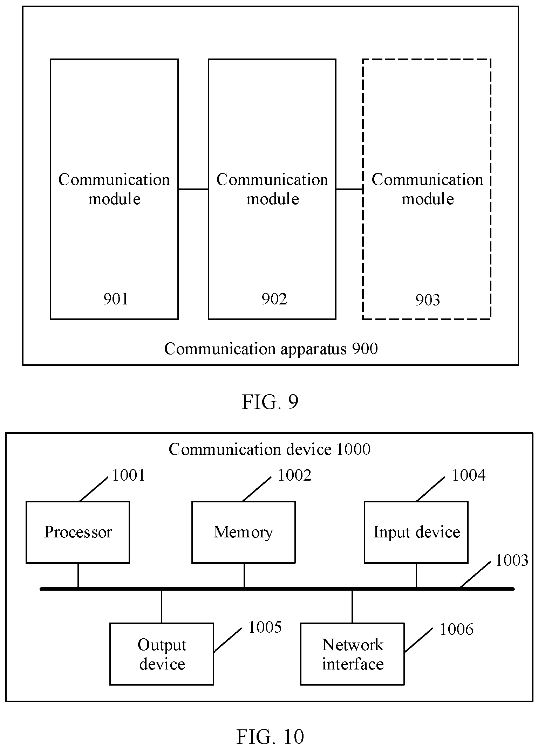

Based on a same inventive concept, an embodiment of this application provides a communication apparatus. The communication apparatus may be a chip or a system-on-a-chip in a first terminal, or may be a functional module that is in the first terminal and that is configured to implement the method in any one of the foregoing possible implementations. For example, FIG. 9 is a schematic diagram of still another structure of a communication apparatus according to an embodiment of this application. As shown by solid lines in FIG. 9, the communication apparatus 900 includes: a communication module 901, configured to: send an encrypted ticket and identification information of a first application to an AS, where the identification information of the first application is used to identify the first application of a first terminal; and receive a data channel application certificate sent by the AS, where the data channel application certificate is sent after a certificate management server successfully verifies the first application based on the encrypted ticket and the identification information of the first application; and a communication module 902, configured to perform an IMS data channel service with a second application of a second terminal based on the data channel application certificate.

In some possible implementations, the communication module 901 is further configured to send an address of a KMS to the AS, where the address of the KMS is used to indicate the certificate management server to communicate with the KMS.

In some other possible implementations, the identification information of the first application includes: a terminal identifier of the first terminal; or a terminal identifier of the first terminal and an application identifier of the first application.

In some other possible implementations, the terminal identifier of the first terminal includes: a device identifier of the first terminal or a user identity of a user using the first terminal.

In some other possible implementations, as shown by dashed lines in FIG. 9, the communication apparatus may further include: a communication module 903, further configured to: before the communication module 901 sends the encrypted ticket and the identification information of the first application to the AS, request the KMS for a key and the ticket; and receive a second key and the encrypted ticket that are allocated by the KMS to the first application, where the encrypted ticket includes: the identification information of the first application, or the identification information of the first application and a key index of the second key.

In some other possible implementations, the communication module 903 is further configured to establish a communication channel with the KMS by using a GBA.

In some other possible implementations, the data channel application certificate is generated by the certificate management server based on the first key, and the first key matches the second key. The communication module 902 is further configured to: when the second terminal successfully verifies the first application, verify the data channel application certificate through cooperation between the first key and the second key.

Based on a same inventive concept, an embodiment of this application provides a communication apparatus. The communication apparatus may be a chip or a system-on-a-chip in an AS, or may be a functional module that is in the AS and that is configured to implement the method in any one of the foregoing possible implementations. For example, still referring to FIG. 8, the communication apparatus includes a communication module 801, configured to receive an encrypted ticket and identification information of a first application from a first terminal, where the identification information of the first application is used to identify the first application of the first terminal; a communication module 803, configured to: send the encrypted ticket and the identification information of the first application to a certificate management server; and receive a first data channel application certificate from the certificate management server, where the first data channel application certificate is allocated by the certificate management server to the first application, and the first data channel application certificate is used by the first application to perform an IMS data channel service with a second application of a second terminal; and a processing module 802, configured to store the first data channel application certificate. The communication module 801 is further configured to send the first data channel application certificate to the first terminal.

In some possible implementations, the communication module 803 is further configured to receive a second data channel application certificate allocated by the certificate management server to the second application, where the second data channel application certificate is used by the second application to perform an IMS data channel service with the first application. The second processing module is further configured to store the second data channel application certificate. The communication module 801 is further configured to send the second data channel application certificate to the second terminal.

In some other possible implementations, the communication module 801 is further configured to obtain a data channel application certificate from the first terminal and a data channel application certificate from the second terminal in a DTLS handshake process. The processing module 802 is further configured to: perform matching on the data channel application certificate from the first terminal and the first data channel application certificate; perform matching on the data channel application certificate from the second terminal and the second data channel application certificate; if the data channel application certificate from the first terminal matches the first data channel application certificate, and the data channel application certificate from the second terminal matches the second data channel application certificate, allow the first application to establish an IMS data channel with the second application; or if the data channel application certificate from the first terminal does not match the first data channel application certificate, and/or the data channel application certificate from the second terminal does not match the second data channel application certificate, forbid the first application from establishing the IMS data channel with the second application.

It should be noted that, the communication module 701, the communication module 702, the communication module 801, the communication module 803, the communication module 901, the communication module 902, and the communication module 903 may be transceiver circuits, transceiver interfaces, transceivers, or the like. The processing module 802 may be one or more processors.

Based on a same inventive concept, an embodiment of this application further provides a terminal, a certificate management server, a KMS, and an AS, which are consistent with the terminal, the certificate management server, the KMS, and the AS in the foregoing one or more embodiments. FIG. 10 is a schematic diagram of hardware of a communication device according to an embodiment of this application. As shown in FIG. 10, the communication device 1000 provided in this embodiment of this application, such as a terminal, a certificate management server, a KMS, or an AS, uses general-purpose computer hardware, including a processor 1001, a memory 1002, a bus 1003, an input device 1004, and an output device 1005.

In some possible implementations, the memory 1002 may include a computer storage medium in a form of a volatile memory and/or a non-volatile memory, for example, a read-only memory and/or a random access memory. The memory 1002 may store an operating system, an application, another program module, executable code, program data, user registration data, user subscription data, and the like.

The input device 1004 may be configured to input commands and information to the communication device 1000. The input device 1004 is, for example, a keyboard or a pointing device, such as a mouse, a trackball, a touchpad, a microphone, a joystick, a game pad, a satellite TV antenna, a scanner, or a similar device. The input devices may be connected to the processor 1001 by using the bus 1003.

The output device 1005 may be used by the communication device 1000 to output information. In addition to a monitor, the output device 1005 may be another peripheral output device, such as a speaker and/or a printing device. The output devices may also be connected to the processor 1001 by using the bus 1003.

The communication device 1000 may be connected to a network through a network interface 1006, for example, to a local area network (local area network, LAN). In a networked environment, computer executable instructions stored in the communication device 1000 may be stored in a remote storage device, and are not limited to being locally stored.

When the processor 1001 in the terminal executes the executable code or the application stored in the memory 1002, the terminal performs the method steps on the terminal side in the foregoing embodiments, for example, performs S401, S501, and S510. For a specific execution process, refer to the foregoing embodiments. Details are not described herein again.

When the processor 1001 in the certificate management server executes the executable code or the application stored in the memory 1002, the terminal performs the method steps on the terminal side in the foregoing embodiments, for example, performs S503, S507, and S508. For a specific execution process, refer to the foregoing embodiments. Details are not described herein again.

When the processor 1001 in the KMS executes the executable code or the application stored in the memory 1002, the terminal performs the method steps on the terminal side in the foregoing embodiments, for example, performs S402 and S403, and S504 to S506. For a specific execution process, refer to the foregoing embodiments. Details are not described herein again.

When the processor 1001 in the AS executes the executable code or the application stored in the memory 1002, the terminal performs the method steps on the terminal side in the foregoing embodiments, for example, performs S503, S509, and S601 to S607. For a specific execution process, refer to the foregoing embodiments. Details are not described herein again.

In addition, the memory 1002 stores computer executable instructions used to implement functions of the communication module 701, the communication module 702, the communication module 801, the communication module 803, the communication module 901, the communication module 902, the communication module 903, and the processing module 802 in FIG. 7 to FIG. 9. Functions/implementation processes of the communication module 701, the communication module 702, the communication module 801, the communication module 803, the communication module 901, the communication module 902, the communication module 903, and the processing module 802 in FIG. 7 to FIG. 9 may all be implemented by using the processor 1001 in FIG. 10 by invoking the computer executable instructions stored in the memory 1002. For specific implementation processes and functions, refer to the foregoing related embodiments.

Based on a same inventive concept, an embodiment of this application provides a communication system. The communication system is a network side of the communication system shown in FIG. 1, and may include a certificate management server, a KMS, and an AS. The certificate management server, the KMS, and/or the AS are separately configured to perform the IMS data channel based communication method in any one of the foregoing possible implementations.

Based on a same inventive concept, an embodiment of this application provides a computer-readable storage medium. The computer-readable storage medium stores instructions. When the instructions are run on a computer, the instructions are used to perform the IMS data channel based communication method in the foregoing embodiments and any possible implementation of the embodiments.

Based on a same inventive concept, an embodiment of this application provides a computer program or a computer program product. When the computer program or the computer program product is executed on a computer, the computer is enabled to implement the IMS data channel based communication method in the foregoing embodiments and any possible implementation of the embodiments.

A person skilled in the art can appreciate that functions described with reference to various illustrative logical blocks, modules, and algorithm steps disclosed and described in this specification may be implemented by hardware, software, firmware, or any combination thereof. If implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium such as a data storage medium, or may include any communication medium that facilitates transmission of a computer program from one medium to another (for example, according to a communication protocol). In this manner, the computer-readable medium may generally correspond to: (1) a non-transitory tangible computer-readable storage medium, or (2) a communication medium such as a signal or a carrier. The data storage medium may be any usable medium that can be accessed by one or more computers or one or more processors to retrieve instructions, code, and/or data structures for implementing the technologies described in this application. A computer program product may include a computer-readable medium.

By way of example and not limitation, such computer-readable storage media may include a RAM, a ROM, an EEPROM, a CD-ROM or another optical disc storage apparatus, a magnetic disk storage apparatus or another magnetic storage apparatus, a flash memory, or any other medium that can store required program code in a form of instructions or data structures and that can be accessed by a computer. In addition, any connection is properly referred to as a computer-readable medium. For example, if an instruction is transmitted from a website, a server, or another remote source through a coaxial cable, an optical fiber, a twisted pair, a digital subscriber line (DSL), or a wireless technology such as infrared, radio, or microwave, the coaxial cable, the optical fiber, the twisted pair, the DSL, or the wireless technology such as infrared, radio, or microwave is included in a definition of the medium. However, it should be understood that the computer-readable storage medium and the data storage medium do not include connections, carriers, signals, or other transitory media, but actually mean non-transitory tangible storage media. Disks and discs used in this specification include a compact disc (CD), a laser disc, an optical disc, a digital versatile disc (DVD), and a Blu-ray disc. The disks usually reproduce data magnetically, whereas the discs reproduce data optically by using lasers. Combinations of the above should also be included within the scope of the computer-readable medium.

An instruction may be executed by one or more processors such as one or more digital signal processors (DSP), a general microprocessor, an application-specific integrated circuit (ASIC), a field programmable gate array (FPGA), or an equivalent integrated circuit or discrete logic circuits. Therefore, the term "processor" used in this specification may refer to the foregoing structure, or any other structure that may be applied to implementation of the technologies described in this specification. In addition, in some aspects, the functions described with reference to the illustrative logical blocks, modules, and steps described in this specification may be provided within dedicated hardware and/or software modules configured for encoding and decoding, or may be incorporated into a combined codec. In addition, the technologies may be completely implemented in one or more circuits or logic elements.

The technologies in this application may be implemented in various apparatuses or devices, including a wireless handset, an integrated circuit (IC), or a set of ICs (for example, a chip set). Various components, modules, or units are described in this application to emphasize functional aspects of apparatuses configured to perform the disclosed technologies but do not necessarily require implementation by different hardware units. Actually, as described above, various units may be combined with appropriate software and/or firmware into a codec hardware unit, or provided by an interoperable hardware unit (including one or more processors described above).

In the foregoing embodiments, descriptions of embodiments have respective focuses. For a part that is not described in detail in an embodiment, refer to related descriptions in other embodiments.

## Claims

1. An internet protocol multimedia subsystem, IMS, data channel based communication method, comprising:
receiving, by a certificate management server (303), an encrypted ticket and identification information of a first application from an application server (304), wherein the identification information of the first application is used to identify the first application of a first terminal;
sending, by the certificate management server (303), the encrypted ticket and the identification information of the first application to a key management server (302);
receiving, by the certificate management server (303), a first key; and
sending, by the certificate management server (303), a data channel application certificate corresponding to the first key to the application server (304), wherein the data channel application certificate is used by the first application to perform an IMS data channel service with a second application of a second terminal.

2. The method according to claim 1, wherein the method further comprises:
obtaining, by the certificate management server (303), an address of the key management server (302); and
the sending, by the certificate management server (303), the encrypted ticket and the identification information of the first application to a key management server (302) comprises:
sending, by the certificate management server (303), the encrypted ticket and the identification information of the first application to the key management server (302) based on the address of the key management server (302).

3. The method according to claim 1 or 2, wherein the sending, by the certificate management server (303), a data channel application certificate corresponding to the first key to the application server (304) comprises:
sending, by the certificate management server (303), the data channel application certificate and the identification information of the first application to the application server (304).

4. The method according to any one of claims 1 to 3, wherein the identification information of the first application comprises: a terminal identifier of the first terminal; or a terminal identifier of the first terminal and an application identifier of the first application.

5. The method according to claim 4, wherein the terminal identifier of the first terminal comprises: a device identifier of the first terminal or a user identity of a user using the first terminal.

6. The method according to any one of claims 1 to 5, wherein the encrypted ticket comprises: the identification information of the first application.

7. An internet protocol multimedia subsystem, IMS, data channel based communication method, comprising:
obtaining, by a key management server (302), a first encrypted ticket and identification information of a first application from a certificate management server (303), wherein the identification information of the first application is used to identify the first application of a first terminal;
decrypting, by the key management server (302), the first encrypted ticket, to obtain identification information in the first encrypted ticket;
verifying, by the key management server (302), the first application based on the identification information in the first encrypted ticket and the identification information of the first application; and
if the first application is successfully verified, sending, by the key management server (302), a first key to the certificate management server (303), wherein the first key is used by the certificate management server (303) to generate a data channel application certificate for the first application, and the data channel application certificate is used by the first application to perform an IMS data channel service with a second application of a second terminal.

8. The method according to claim 7, wherein the verifying, by the key management server (302), the first application based on the identification information in the first encrypted ticket and the identification information of the first application comprises:
determining, by the key management server (302), whether the identification information in the first encrypted ticket matches the identification information of the first application, wherein if the identification information in the first encrypted ticket matches the identification information of the first application, it indicates that the first application is successfully verified; or if the identification information in the first encrypted ticket does not match the identification information of the first application, it indicates that verification on the first application fails.

9. The method according to claim 7 or 8, wherein the first encrypted ticket further comprises a key index; and
the verifying, by the key management server (302), the first application based on the identification information in the first encrypted ticket and the identification information of the first application comprises:
verifying, by the key management server (302), the first application based on the identification information in the first encrypted ticket, the key index, and the identification information of the first application.

10. The method according to claim 9, wherein the verifying, by the key management server (302), the first application based on the identification information in the first encrypted ticket, the key index, and the identification information of the first application comprises:
determining, by the key management server (302), whether the identification information in the first encrypted ticket matches the identification information of the first application; and
if the identification information in the first encrypted ticket matches the identification information of the first application, determining, by the key management server (302), whether the key index matches a second key, wherein the second key is allocated by the key management server (302) to the first application; and
if the key index matches the second key, it indicates that the first application is successfully verified; or if the key index does not match the second key, it indicates that the verification on the first application fails.

11. The method according to any one of claims 7 to 10, wherein before the obtaining, by a key management server (302), a first encrypted ticket and identification information of a first application from a certificate management server (303), the method further comprises:
receiving, by the key management server (302), a key request from the first terminal;
in response to the key request, allocating, by the key management server (302), the second key and a second encrypted ticket to the first application, wherein the second encrypted ticket comprises the identification information of the first application, or the identification information of the first application and a key index of the second key; and
sending, by the key management server (302), the second key and the second encrypted ticket to the first terminal.

12. The method according to any one of claims 7 to 11, wherein the identification information of the first application comprises: a terminal identifier of the first terminal; or a terminal identifier of the first terminal and an application identifier of the first application.

13. The method according to any one of claims 7 to 12, wherein the method further comprises:
establishing, by the key management server (302), a communication channel with the first terminal by using a generic bootstrapping architecture, GBA.

14. A certificate management server, comprising a processor and a memory, wherein the processor is coupled to the memory; and the processor is configured to read and execute instructions in the memory, to implement the internet protocol multimedia subsystem IMS data channel based communication method according to any one of claims 1 to 6.

15. A key management server KMS, comprising a processor and a memory, wherein the processor is coupled to the memory; and the processor is configured to read and execute instructions in the memory, to implement the internet protocol multimedia subsystem IMS data channel based communication method according to any one of claims 7 to 13.

## Patentansprüche

1. Auf Internetprotokoll-Multimedia-Subsystem-Datenkanal, IMS-Datenkanal, basierendes Kommunikationsverfahren, umfassend:
Empfangen, durch einen Zertifikatverwaltungsserver (303), eines verschlüsselten Tickets und von Identifikationsinformationen einer ersten Anwendung von einem Anwendungsserver (304), wobei die Identifikationsinformationen der ersten Anwendung verwendet werden, um die erste Anwendung eines ersten Endgeräts zu identifizieren;
Senden, durch den Zertifikatverwaltungsserver (303), des verschlüsselten Tickets und der Identifikationsinformationen der ersten Anwendung an einen Schlüsselverwaltungsserver (302);
Empfangen, durch den Zertifikatverwaltungsserver (303), eines ersten Schlüssels; und
Senden, durch den Zertifikatverwaltungsserver (303), eines Datenkanal-Anwendungszertifikats, das dem ersten Schlüssel entspricht, an den Anwendungsserver (304), wobei das Datenkanal-Anwendungszertifikat durch die erste Anwendung verwendet wird, um einen IMS-Datenkanaldienst mit einer zweiten Anwendung eines zweiten Endgeräts durchzuführen.

2. Verfahren nach Anspruch 1, wobei das Verfahren ferner Folgendes umfasst:
Erlangen, durch den Zertifikatverwaltungsserver (303), einer Adresse des Schlüsselverwaltungsservers (302); und
wobei das Senden, durch den Zertifikatverwaltungsserver (303), des verschlüsselten Tickets und der Identifikationsinformationen der ersten Anwendung an einen Schlüsselverwaltungsserver (302) Folgendes umfasst:
Senden, durch den Zertifikatverwaltungsserver (303), des verschlüsselten Tickets und der Identifikationsinformationen der ersten Anwendung an den Schlüsselverwaltungsserver (302) basierend auf der Adresse des Schlüsselverwaltungsservers (302).

3. Verfahren nach Anspruch 1 oder 2, wobei das Senden, durch den Zertifikatverwaltungsserver (303), eines Datenkanal-Anwendungszertifikats, das dem ersten Schlüssel entspricht, an den Anwendungsserver (304) Folgendes umfasst:
Senden, durch den Zertifikatverwaltungsserver (303), des Datenkanal-Anwendungszertifikats und der Identifikationsinformationen der ersten Anwendung an den Anwendungsserver (304).

4. Verfahren nach einem der Ansprüche 1 bis 3, wobei die Identifikationsinformationen der ersten Anwendung Folgendes umfassen: eine Endgerätekennung des ersten Endgeräts; oder eine Endgerätekennung des ersten Endgeräts und eine Anwendungskennung der ersten Anwendung.

5. Verfahren nach Anspruch 4, wobei die Endgerätekennung des ersten Endgeräts Folgendes umfasst: eine Vorrichtungskennung des ersten Endgeräts oder eine Benutzeridentität eines Benutzers, der das erste Endgerät verwendet.

6. Verfahren nach einem der Ansprüche 1 bis 5, wobei das verschlüsselte Ticket Folgendes umfasst: die Identifikationsinformationen der ersten Anwendung.

7. Auf Internetprotokoll-Multimedia-Subsystem-Datenkanal, IMS-Datenkanal, basierendes Kommunikationsverfahren, umfassend:
Erlangen, durch einen Schlüsselverwaltungsserver (302), eines ersten verschlüsselten Tickets und von Identifikationsinformationen einer ersten Anwendung von einem Zertifikatverwaltungsserver (303), wobei die Identifikationsinformationen der ersten Anwendung verwendet werden, um die erste Anwendung eines ersten Endgeräts zu identifizieren;
Entschlüsseln, durch den Schlüsselverwaltungsserver (302), des ersten verschlüsselten Tickets, um Identifikationsinformationen in dem ersten verschlüsselten Ticket zu erlangen;
Verifizieren, durch den Schlüsselverwaltungsserver (302), der ersten Anwendung basierend auf den Identifikationsinformationen in dem ersten verschlüsselten Ticket und den Identifikationsinformationen der ersten Anwendung; und
wenn die erste Anwendung erfolgreich verifiziert ist, Senden, durch den Schlüsselverwaltungsserver (302), eines ersten Schlüssels an den Zertifikatverwaltungsserver (303), wobei der erste Schlüssel durch den Zertifikatverwaltungsserver (303) verwendet wird, um ein Datenkanal-Anwendungszertifikat für die erste Anwendung zu generieren, und das Datenkanal-Anwendungszertifikat durch die erste Anwendung verwendet wird, um einen IMS-Datenkanaldienst mit einer zweiten Anwendung eines zweiten Endgeräts durchzuführen.

8. Verfahren nach Anspruch 7, wobei das Verifizieren, durch den Schlüsselverwaltungsserver (302), der ersten Anwendung basierend auf den Identifikationsinformationen in dem ersten verschlüsselten Ticket und den Identifikationsinformationen der ersten Anwendung Folgendes umfasst:
Bestimmen, durch den Schlüsselverwaltungsserver (302), ob die Identifikationsinformationen in dem ersten verschlüsselten Ticket mit den Identifikationsinformationen der ersten Anwendung übereinstimmen, wobei, wenn die Identifikationsinformationen in dem ersten verschlüsselten Ticket mit den Identifikationsinformationen der ersten Anwendung übereinstimmen, dieser anzeigt, dass die erste Anwendung erfolgreich verifiziert wurde; oder, wenn die Identifikationsinformationen in dem ersten verschlüsselten Ticket nicht mit den Identifikationsinformationen der ersten Anwendung übereinstimmen, dieser anzeigt, dass die Verifizierung bei der ersten Anwendung fehlgeschlagen ist.

9. Verfahren nach Anspruch 7 oder 8, wobei das erste verschlüsselte Ticket ferner einen Schlüsselindex umfasst; und wobei das Verifizieren, durch den Schlüsselverwaltungsserver (302), der ersten Anwendung basierend auf den Identifikationsinformationen in dem ersten verschlüsselten Ticket und den Identifikationsinformationen der ersten Anwendung Folgendes umfasst:
Verifizieren, durch den Schlüsselverwaltungsserver (302), der ersten Anwendung basierend auf den Identifikationsinformationen in dem ersten verschlüsselten Ticket, dem Schlüsselindex und den Identifikationsinformationen der ersten Anwendung.

10. Verfahren nach Anspruch 9, wobei das Verifizieren, durch den Schlüsselverwaltungsserver (302), der ersten Anwendung basierend auf den Identifikationsinformationen in dem ersten verschlüsselten Ticket, dem Schlüsselindex und den Identifikationsinformationen der ersten Anwendung Folgendes umfasst:
Bestimmen, durch den Schlüsselverwaltungsserver (302), ob die Identifikationsinformationen in dem ersten verschlüsselten Ticket mit den Identifikationsinformationen der ersten Anwendung übereinstimmen; und
wenn die Identifikationsinformationen in dem ersten verschlüsselten Ticket mit den Identifikationsinformationen der ersten Anwendung übereinstimmen, Bestimmen, durch den Schlüsselverwaltungsserver (302), ob der Schlüsselindex mit einem zweiten Schlüssel übereinstimmt, wobei der zweite Schlüssel durch den Schlüsselverwaltungsserver (302) der ersten Anwendung zugewiesen wird; und
wobei, wenn der Schlüsselindex mit dem zweiten Schlüssel übereinstimmt, dieser anzeigt, dass die erste Anwendung erfolgreich verifiziert wurde; oder wenn der Schlüsselindex nicht mit dem zweiten Schlüssel übereinstimmt, dieser anzeigt, dass die Verifizierung bei der ersten Anwendung fehlgeschlagen ist.

11. Verfahren nach einem der Ansprüche 7 bis 10, wobei vor dem Erlangen, durch einen Schlüsselverwaltungsserver (302), eines ersten verschlüsselten Tickets und von Identifikationsinformationen einer ersten Anwendung von einem Zertifikatverwaltungsserver (303), das Verfahren ferner Folgendes umfasst:
Empfangen, durch den Schlüsselverwaltungsserver (302), einer Schlüsselanforderung von dem ersten Endgerät;
als Reaktion auf die Schlüsselanforderung, Zuweisen, durch den Schlüsselverwaltungsserver (302), des zweiten Schlüssels und eines zweiten verschlüsselten Tickets zu der ersten Anwendung, wobei das zweite verschlüsselte Ticket die Identifikationsinformationen der ersten Anwendung oder die Identifikationsinformationen der ersten Anwendung und einen Schlüsselindex des zweiten Schlüssels umfasst; und
Senden, durch den Schlüsselverwaltungsserver (302), des zweiten Schlüssels und des zweiten verschlüsselten Tickets an das erste Endgerät.

12. Verfahren nach einem der Ansprüche 7 bis 11, wobei die Identifikationsinformationen der ersten Anwendung Folgendes umfassen: eine Endgerätekennung des ersten Endgeräts; oder eine Endgerätekennung des ersten Endgeräts und eine Anwendungskennung der ersten Anwendung.

13. Verfahren nach einem der Ansprüche 7 bis 12, wobei das Verfahren ferner Folgendes umfasst:
Einrichten, durch den Schlüsselverwaltungsserver (302), eines Kommunikationskanals mit dem ersten Endgerät unter Verwendung einer generischen Bootstrapping-Architektur, GBA.

14. Zertifikatverwaltungsserver, umfassend einen Prozessor und einen Speicher, wobei der Prozessor an den Speicher gekoppelt ist; und der Prozessor dazu konfiguriert ist, Anweisungen in dem Speicher zu lesen und auszuführen, um das auf Internetprotokoll-Multimedia-Subsystem-Datenkanal, IMS-Datenkanal, basierende Kommunikationsverfahren nach einem der Ansprüche 1 bis 6 zu implementieren.

15. Schlüsselverwaltungsserver, KMS, umfassend einen Prozessor und einen Speicher, wobei der Prozessor an den Speicher gekoppelt ist; und der Prozessor dazu konfiguriert ist, Anweisungen in dem Speicher zu lesen und auszuführen, um das auf Internetprotokoll-Multimedia-Subsystem-Datenkanal, IMS-Datenkanal, basierende Kommunikationsverfahren nach einem der Ansprüche 7 bis 13 zu implementieren.

## Revendications

1. Procédé de communication à base d'un canal de données, de sous-système multimédia de protocole Internet, IMS, comprenant :
la réception, par un serveur de gestion de certificats (303), d'un ticket chiffré et d'informations d'identification d'une première application en provenance d'un serveur d'application (304), dans lequel les informations d'identification de la première application sont utilisées pour identifier la première application d'un premier terminal ;
l'envoi, par le serveur de gestion de certificats (303), du ticket chiffré et des informations d'identification de la première application à un serveur de gestion de clés (302) ;
la réception, par le serveur de gestion de certificats (303), d'une première clé ; et
l'envoi, par le serveur de gestion de certificats (303), d'un certificat d'application de canal de données correspondant à la première clé au serveur d'application (304), dans lequel le certificat d'application de canal de données est utilisé par la première application pour réaliser un service de canal de données IMS avec une seconde application d'un second terminal.

2. Procédé selon la revendication 1, dans lequel le procédé comprend également :
l'obtention, par le serveur de gestion de certificats (303), d'une adresse du serveur de gestion de clés (302) ; et
l'envoi, par le serveur de gestion de certificats (303), du ticket chiffré et des informations d'identification de la première application à un serveur de gestion de clés (302) comprend :
l'envoi, par le serveur de gestion de certificats (303), du ticket chiffré et des informations d'identification de la première application au serveur de gestion de clés (302) sur la base de l'adresse du serveur de gestion de clés (302).

3. Procédé selon la revendication 1 ou 2, dans lequel l'envoi, par le serveur de gestion de certificats (303), d'un certificat d'application de canal de données correspondant à la première clé au serveur d'application (304) comprend :
l'envoi, par le serveur de gestion de certificats (303), du certificat d'application de canal de données et des informations d'identification de la première application au serveur d'application (304).

4. Procédé selon l'une quelconque des revendications 1 à 3, dans lequel les informations d'identification de la première application comprennent : un identifiant de terminal du premier terminal ; ou un identifiant de terminal du premier terminal et un identifiant d'application de la première application.

5. Procédé selon la revendication 4, dans lequel l'identifiant de terminal du premier terminal comprend : un identifiant de dispositif du premier terminal ou une identité d'utilisateur d'un utilisateur utilisant le premier terminal.

6. Procédé selon l'une quelconque des revendications 1 à 5, dans lequel le ticket chiffré comprend : les informations d'identification de la première application.

7. Procédé de communication à base d'un canal de données, de sous-système multimédia de protocole Internet, IMS, comprenant :
l'obtention, par un serveur de gestion de clés (302), d'un premier ticket chiffré et d'informations d'identification d'une première application en provenance d'un serveur de gestion de certificats (303), dans lequel les informations d'identification de la première application sont utilisées pour identifier la première application d'un premier terminal ;
le déchiffrage, par le serveur de gestion de clés (302), du premier ticket chiffré, pour obtenir des informations d'identification dans le premier ticket chiffré ;
la vérification, par le serveur de gestion de clés (302), de la première application sur la base des informations d'identification dans le premier ticket chiffré et des informations d'identification de la première application ; et
si la première application est vérifiée avec succès, l'envoi, par le serveur de gestion de clés (302), d'une première clé au serveur de gestion de certificats (303), dans lequel la première clé est utilisée par le serveur de gestion de certificats (303) pour générer un certificat d'application de canal de données pour la première application, et le certificat d'application de canal de données est utilisé par la première application pour réaliser un service de canal de données IMS avec une seconde application d'un second terminal.

8. Procédé selon la revendication 7, dans lequel la vérification, par le serveur de gestion de clés (302), de la première application sur la base des informations d'identification dans le premier ticket chiffré et des informations d'identification de la première application comprend :
le fait de déterminer, par le serveur de gestion de clés (302), si les informations d'identification dans le premier ticket chiffré correspondent aux informations d'identification de la première application, dans lequel si les informations d'identification dans le premier ticket chiffré correspondent aux informations d'identification de la première application, cela indique que la première application a été vérifiée avec succès ; ou si les informations d'identification dans le premier ticket chiffré ne correspondent pas aux informations d'identification de la première application, cela indique que la vérification sur la première application a échoué.

9. Procédé selon la revendication 7 ou 8, dans lequel le premier ticket chiffré comprend également un index de clé ; et
la vérification, par le serveur de gestion de clés (302), de la première application sur la base des informations d'identification dans le premier ticket chiffré et des informations d'identification de la première application comprend :
la vérification, par le serveur de gestion de clés (302), de la première application sur la base des informations d'identification dans le premier ticket chiffré, de l'index de clé et des informations d'identification de la première application.

10. Procédé selon la revendication 9, dans lequel la vérification, par le serveur de gestion de clés (302), de la première application sur la base des informations d'identification dans le premier ticket chiffré, de l'index de clé et des informations d'identification de la première application comprend :
le fait de déterminer, par le serveur de gestion de clés (302), si les informations d'identification dans le premier ticket chiffré correspondent aux informations d'identification de la première application ; et
si les informations d'identification dans le premier ticket chiffré correspondent aux informations d'identification de la première application, le fait de déterminer, par le serveur de gestion de clés (302), si l'index de clés correspond à une seconde clé, dans lequel la seconde clé est allouée par le serveur de gestion de clés (302) à la première application ; et
si l'index de clé correspond à la seconde clé, cela indique que la première application a été vérifiée avec succès ; ou si l'index de clé ne correspond pas à la seconde clé, cela indique que la vérification sur la première application a échoué.

11. Procédé selon l'une quelconque des revendications 7 à 10, dans lequel avant l'obtention, par un serveur de gestion de clés (302), d'un premier ticket chiffré et d'informations d'identification d'une première application en provenance d'un serveur de gestion de certificats (303), le procédé comprend également :
la réception, par le serveur de gestion de clés (302), d'une requête de clé en provenance du premier terminal ;
en réponse à la requête de clé, l'allocation, par le serveur de gestion de clés (302), de la seconde clé et d'un second ticket chiffré à la première application, dans lequel le second ticket chiffré comprend les informations d'identification de la première application, ou les informations d'identification de la première application et un index de clé de la seconde clé ; et
l'envoi, par le serveur de gestion de clés (302), de la seconde clé et le second ticket chiffré au premier terminal.

12. Procédé selon l'une quelconque des revendications 7 à 11, dans lequel les informations d'identification de la première application comprennent : un identifiant de terminal du premier terminal ; ou un identifiant de terminal du premier terminal et un identifiant d'application de la première application.

13. Procédé selon l'une quelconque des revendications 7 à 12, dans lequel le procédé comprend également :
l'établissement, par le serveur de gestion de clés (302), d'un canal de communication avec le premier terminal en utilisant une architecture d'amorçage générique, GBA.

14. Serveur de gestion de certificats, comprenant un processeur et une mémoire, dans lequel le processeur est couplé à la mémoire ; et le processeur étant configuré pour lire et exécuter des instructions dans la mémoire, pour mettre en œuvre le procédé de communication basé sur le canal de données IMS de sous-système multimédia de protocole Internet selon l'une quelconque des revendications 1 à 6.

15. Serveur de gestion de clés, KMS, comprenant un processeur et une mémoire, dans lequel le processeur étant couplé à la mémoire ; et le processeur étant configuré pour lire et exécuter des instructions dans la mémoire, pour mettre en œuvre le procédé de communication basé sur le canal de données IMS de sous-système multimédia de protocole Internet selon l'une quelconque des revendications 7 à 13.
